(19) Europäisches Patentamt
European Patent Office
Office européen des brevets

(11) **EP 4 651 352 A1**

(12) **EUROPEAN PATENT APPLICATION**

(43) Date of publication:
**19.11.2025 Bulletin 2025/47**

(21) Application number: **25175222.6**

(22) Date of filing: **09.05.2025**

(51) International Patent Classification (IPC):
***H02M 1/00*** *(2006.01)* ***H02M 3/335*** *(2006.01)*

(52) Cooperative Patent Classification (CPC):
**H02M 3/33523; H02M 1/0022; H02M 1/0025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.05.2024 US 202463648398 P**
**24.04.2025 US 202519188451**

(71) Applicant: **Power Integrations, Inc.**
**San Jose, CA 95138 (US)**

(72) Inventors:
- **Djenguerian, Alex B.**
  **Saratoga, 95070 (US)**
- **Sato, Takayasu**
  **San Jose, 95118 (US)**

(74) Representative: **Fish & Richardson P.C.**
**Highlight Business Towers**
**Mies-van-der-Rohe-Straße 8**
**80807 München (DE)**

(54) **A POWER SUPPLY CONTROLLER FOR ENHANCING CONTROL LOOP STABILITY AND METHOD HEREIN**

(57) According to the teachings herein, a switch mode power supply controller includes circuitry to reduce gain variation of switching frequency as a function of control current. The controller may reduce gain variation of frequency by limiting frequency according to on-time and off-time control relationships. In an analog implementation, frequency is limited according to the switching period of an oscillator. On each cycle, an analog off-time modulator (OTM) may determine the oscillator off-time; while a comparator and sense element may determine, at least in part, the oscillator on-time. Together the oscillator off-time and on-time may set the switching period.

100
115
114
117
VIN
VOUT
102
103
RTN
ISW
IV
D
V
105
DR
S1
108
C
IC
S
BP
CONTROLLER WITH
OFF-TIME MODULATOR
102
GND

FIG. 1A

EP 4 651 352 A1

## Description

### CROSS-REFERENCE TO RELATED APPLICATION(S)

This application claims the benefit of U.S. Provisional Application No. 63/648,398, filed on May 16, 2024, and U.S. Non-Provisional Application No. 19/188,451, filed on April 24, 2025, incorporated by reference herein in their entirety.

### BACKGROUND INFORMATION

#### Field of the Disclosure

The present invention relates to power supply controllers, and more specifically to the control of switches in switch mode power converters.

#### Background

Switch mode power converters, also referred to as power converters or switch mode power supplies (SMPSs), are commonly used due to their high efficiency, small size, and low weight. A flyback converter is an SMPS topology isolated between primary and secondary windings of an energy transfer element (e.g., a magnetic component or coupled inductor). Components and circuitry connected and referenced to the primary winding are often referred to as primary side components/circuitry. Similarly, components and circuitry connected and referenced to the secondary winding are often referred to as secondary side components/circuitry. In this way the flyback converter is configured to have a primary side and a secondary side.

The switched mode power supply/converter controller may be part of a closed-loop system for regulating output power as a function of one or more system signals (e.g., output voltage). The switched mode power converter controller, or simply "controller", may control switching. For instance, the controller may control the switching of a primary switch in a flyback converter.

During operation, the switch (e.g., primary switch) is gated according to a switching cycle based on system or controller configuration (e.g., flyback configuration). Duty cycle (typically the ratio of the on time of the switch to the total switching period), switching frequency, or number of pulses per unit time of the switch may be varied to regulate the output (e.g., output power) based on sensed, feedback signals.

System performance, including system stability, dynamic range, and system bandwidth, may depend, at least in part, on the way a controller drives the switch on and off. Often system bandwidth may be degraded at the expense of improving system stability.

#### Summary of the Disclosure

This disclosure presents a control approach to improve system stability without degrading system bandwidth in a power converter. The controller improves stability by reducing variations in switching frequency in relation to one or more control or feedback signals. For instance, the control signal may be a control current or switch current; and the controller may control switching period according to on-time and off-time control relationships (e.g., control equations).

The controller may include circuitry to monitor and control the on-time and off-time of an oscillator switching cycle according to the on-time and off-time control relationships. For instance, during select cycles, an off-time modulator (OTM) may determine, at least in part, an oscillator off-time; while a comparator and sense element may determine, at least in part, an oscillator on-time.

### BRIEF DESCRIPTION OF THE DRAWINGS

Non-limiting and non-exhaustive embodiments of a power supply converter for enhancing control loop stability are described with reference to the following figures, wherein like reference numerals refer to like parts throughout the various views unless otherwise specified.

**FIG. 1A** illustrates a flyback converter according to the teachings herein.
**FIG. 1B** illustrates a schematic diagram of a controller and primary switch according to an embodiment of the present disclosure.
**FIG. 2A** illustrates a flyback control model according to an embodiment of the present disclosure.
**FIG. 2B** illustrates a flyback control model according to another embodiment of the present disclosure.
**FIG. 2C** illustrates a current control loop according to an embodiment of the present disclosure.

**FIG. 2D** illustrates a voltage control loop according to an embodiment of the present disclosure.

**FIG. 2E** illustrates feedforward path according to an embodiment of the present disclosure.

**FIG. 3A** illustrates waveforms of a modulator signal, oscillator signal, and drive signal according to an embodiment of the present disclosure.

**FIG. 3B** illustrates waveforms of a modulator signal, oscillator signal, and drive signal according to an embodiment of the present disclosure.

**FIG. 3C** illustrates waveforms of a modulator signal, oscillator signal, and drive signal according to an embodiment of the present disclosure.

**FIG. 3D** illustrates waveforms of a modulator signal, oscillator signal, and drive signal according to an embodiment of the present disclosure.

**FIG. 4** illustrates a circuit realization of an oscillator according to an embodiment of the present disclosure.

**FIG. 5** illustrates a circuit realization of an off-time modulator according to an embodiment of the present disclosure.

**FIG. 6** illustrates a circuit realization of control logic according to an embodiment of the present disclosure.

**FIG. 7** illustrates a circuit realization of a line interface circuit according to an embodiment of the present disclosure.

**FIG. 8** illustrates a gate-level circuit realization of a switch current reference generator according to an embodiment of the present disclosure.

**FIG. 9A** illustrates waveforms according to an embodiment of the present disclosure.

**FIG. 9B** illustrates waveforms according to an embodiment of the present disclosure.

**FIG. 9C** illustrates waveforms according to an embodiment of the present disclosure.

**FIG. 9D** illustrates waveforms according to an embodiment of the present disclosure.

**FIG. 10A** illustrates a flowchart for driving a primary switch and for determining oscillator turn on time according to the teachings herein.

**FIG. 10B** illustrates a flowchart for determining oscillator turn off time according to the teachings herein.

**FIG. 10C** illustrates a conceptual flow diagram according to the teachings herein.

**FIG. 11A** illustrates plots of frequency versus control current according to a controller with large variations in gain.

**FIG. 11B** illustrates plots of frequency versus control current according to the teachings herein.

**FIG. 12A** illustrates plots of oscillator off time versus input voltage showing different choices for scaling factors for compensating minimum off time.

**FIG. 12B** compares plots of output power versus input voltage.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the teachings herein.

Also, common but well-understood elements that are useful or necessary in a commercially feasible embodiment are often not depicted in order to facilitate a less obstructed view of these various embodiments of a power supply converter for enhancing control loop stability.

## DETAILED DESCRIPTION

In the following description, numerous specific details are set forth in order to provide a thorough understanding of a power supply converter for enhancing control loop stability. It will be apparent, however, to one having ordinary skill in the art that the specific detail need not be employed to practice the teachings herein. In other instances, well-known materials or methods have not been described in detail in order to avoid obscuring the present disclosure.

As discussed above, a flyback converter is one type of switch mode power supply topology. A flyback converter is a SMPS topology that includes isolation between primary and secondary windings of an energy transfer element (e.g., a magnetic component or coupled inductor). Components and circuitry connected and referenced to the primary winding are often referred to as primary side components/circuitry. Similarly, components and circuitry connected and referenced to the secondary winding are often referred to as secondary side components/circuitry. In this way the flyback converter is configured to have a primary side and a secondary side.

Also, as discussed above, a switch may be gated or controlled according to a switching cycle based on system or controller configuration. During operation, a switch mode power supply often uses one or more controllers to regulate and transfer power based on signal information such as output voltage and/or current.

In a flyback configuration, controllers may include primary side controllers and/or secondary side controllers; and there may be a need to communicate signal information from the secondary side to the primary side. For instance, to regulate output power on the secondary side, a primary side controller may require receiving the value of the output voltage at the secondary side.

One way to communicate signal information is by means of an optocoupler. For instance, a control current (e.g., a phototransistor current) may be generated by the optocoupler in proportion to the output voltage.

The control current (e.g., phototransistor current) may be provided to the primary side controller which, in response, may vary the switching of a primary side switch to adjust/regulate power (e.g., output power) and/or output voltage.

One aspect of control is alternating current (ac) response and control loop stability. Control loop stability may be determined, at least in part, by a gain relationship of frequency as a function of control current. Unfortunately, the gain relationship may exhibit large variation as a function of control current, thereby complicating control loop stability and/or reducing the useable range of control current.

Accordingly, there is a need to develop control circuitry to reduce gain variation as a function of control current.

According to the teachings herein, a switch mode power supply controller includes circuitry to reduce gain variation of switching frequency as a function of control current. The controller may reduce gain variation of frequency by limiting frequency according to on-time and off-time control equations. In an analog implementation, frequency is limited according to the switching period of an oscillator. On each cycle, an analog off-time modulator (OTM) may determine the oscillator off-time; while a comparator and sense element may determine, at least in part, the oscillator on-time. Together the oscillator off-time and on-time may set the switching period.

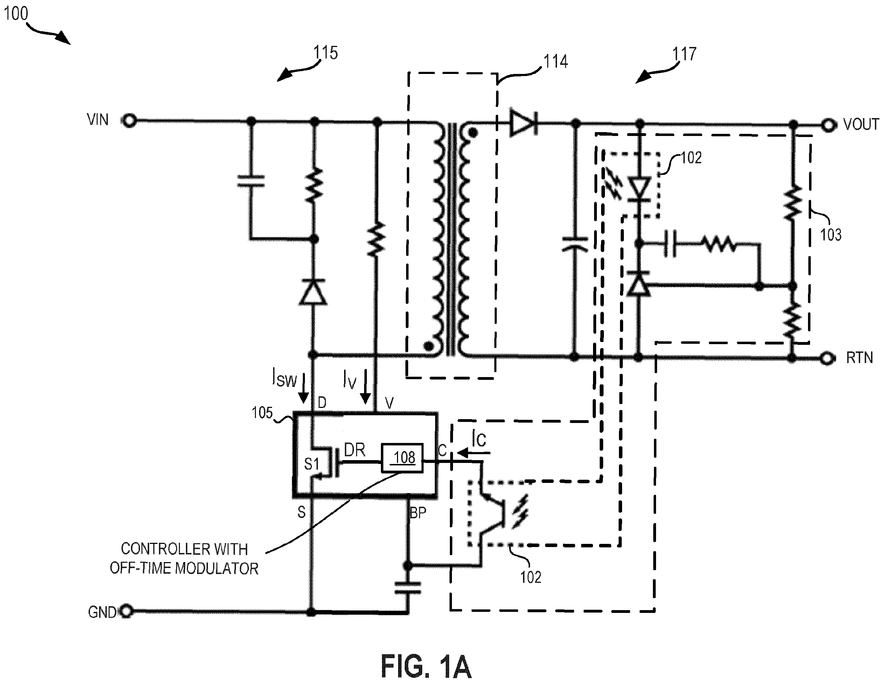

**FIG. 1A** illustrates a flyback converter 100 according to the teachings herein. Flyback converter 100 includes an energy transfer element 114. As discussed above, energy transfer element 114 (e.g., a transformer and/or coupled inductor/inductance) may provide isolation (i.e., galvanic isolation) between a primary side 115 and secondary side 117. The primary side 115 is referenced to a primary ground GND and the secondary side 117 is referenced to a secondary ground RTN.

Flyback converter 100 also includes feedback circuitry 103 and a switcher circuit 105. Switcher circuit 105 may be an integrated switcher circuit 105 including primary switch S1 and controller 108. The switcher circuit 105 may receive a supply voltage at pin BP and connect to a ground GND via a source pin S. In addition, control current Ic may be received at control pin C, and switch current $I_{SW}$ may be received at the drain of switch S1, also referred to as drain pin D.

Additionally, the switcher circuit may receive a current Iv at pin V. Current Iv may be proportional to the input voltage VIN and may be referred to as a feedforward signal Iv without departing from the scope of this disclosure.

According to the teachings herein, controller 108 includes an off-time modulator which may determine, at least in part, the switching frequency of switch S1.

Feedback circuitry 103 includes an optocoupler 102. The optocoupler 102 may communicate information relating to output voltage VOUT from the secondary side 117 to the switcher circuit 105 on the primary side 115 by generating current Ic (i.e., phototransistor current Ic). Current Ic is a feedback signal indicative of output voltage VOUT and may also be referred to as a control current Ic without departing from the scope of this disclosure.

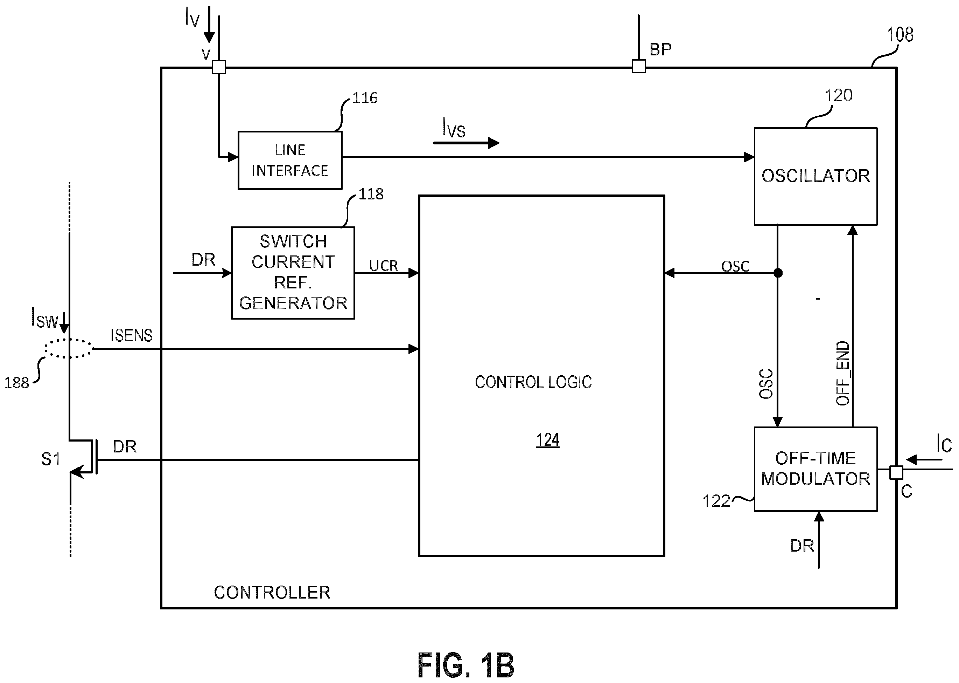

**FIG. 1B** illustrates a schematic diagram of controller 108 and primary switch S1 according to an embodiment of the present disclosure. Controller 108 includes a line interface circuit 116, a switch current reference generator 118, an oscillator 120, an off-time modulator 122, and control logic 124. Line interface circuit 116 may provide a current $I_{VS}$ to the oscillator 120 and may also be referred to as a feedforward signal $I_{VS}$ without departing from the scope of this disclosure.

Primary switch S1 may receive a drive signal DR and, in response, provide switch current Isw. The drive signal DR may be a pulse modulated signal characterized by a rectangular wave.

A current sense element 188 may provide a signal ISENS proportional to switch current $I_{SW}$. Signal ISENS may be a current; and may also be referred to as current ISENS without departing from the scope of this disclosure.

Switch current reference generator 118 may provide a reference UCR. The reference UCR may be variable. For instance, reference UCR may vary according to a waveform of drive signal DR.

Oscillator 120 may generate an oscillator signal OSC, which also may be a pulse modulated signal characterized by a rectangular waveform.

According to the teachings herein, the control logic 124 may provide drive signal DR to primary switch S1 such that a switching period of the drive signal DR is equal to the switching period of the oscillator signal.

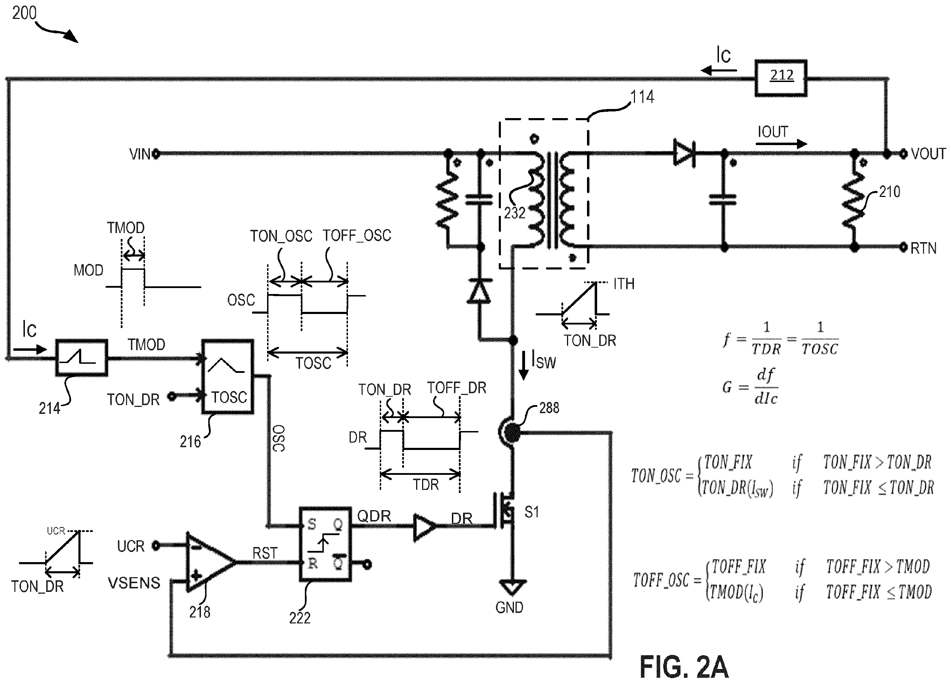

**FIG. 2A** illustrates a flyback control model 200 according to an embodiment of flyback converter 100. Control model 200 represents a higher-level abstraction of the functionality of an embodiment of flyback converter 100. The flyback control model 200 includes primary switch S1, energy transfer element 114, behavioral feedback circuitry 212, a behavioral off-time modulator 214, a behavioral oscillator 216, a comparator 218, an edge-triggered set-reset (SR) latch 222, a behavioral current sense element 288, and a load 210.

Output power is transferred to the load 210 with regulated output voltage VOUT and load current IOUT. Load current IOUT may also be referred to as output current IOUT without departing from the scope of this disclosure.

Behavioral feedback circuitry 212 may be a behavioral representation of feedback circuitry 103. A behavioral representation is intended to provide a simplified description of the functionality or behavior of the element to help aid understanding of the present disclosure. Behavioral feedback circuitry 212 provides a feedback signal (i.e., control current Ic) indicative of the output voltage VOUT. Although the feedback signal (i.e., control current Ic) is shown as a current; other types of feedback signals (e.g., voltages) are possible. Behavioral feedback circuitry 212 provides control current Ic to behavioral off-time modulator 214.

The behavioral off-time modulator 214 may be a behavioral representation of off-time modulator 122. Behavioral off-time modulator 214 may generate a modulator signal MOD having a pulse of modulation width TMOD with units of time. Although the modulation width TMOD is shown as being generated from modulator signal MOD, a pulse signal, other configurations are possible. For instance, modulation width TMOD could be generated with other types of modulator signals (e.g., a sawtooth ramp). Alternatively, modulation width TMOD could be generated from a negative going pulse. Additionally, modulation width TMOD could be generated using a digital and/or software approach. Modulation width TMOD is used to determine the off time of the oscillator in accordance with a specific relationship discussed in more detail below. Behavioral off-time modulator 214 provides modulation width TMOD to behavioral oscillator 216.

The behavioral oscillator 216 may be a behavioral representation of oscillator 120. Behavioral oscillator 216 receives the modulation width TMOD and a drive on time TON_DR. Behavioral oscillator 216 provides oscillator signal OSC to the set input of edge-triggered SR latch 222. Drive on time TON_DR is a time duration determined, at least in part, by the switch current $I_{SW}$.

The behavioral current sense element 288 may be a behavioral representation of current sense element 188. Behavioral current sense element 288 may sense switch current $I_{SW}$ and provide sense voltage VSENS indicative of the switch current $I_{SW}$. Behavioral current sense element 288 may provide sense voltage VSENS to the non-inverting input of comparator 218.

Comparator 218 compares reference UCR at its inverting input to the sense voltage VSENS, and in response, provides a reset signal RST to the edge-triggered SR latch 222. Reference UCR may be a fixed or variable reference UCR. Reference UCR may include slope compensation for stability and/or for ramp time modulation (RTM). Ramp time modulation (RTM), related to a form of current limit threshold, is discussed in U.S. Patent No. 9,246,392, the entirety of which is incorporated by reference herein.

The comparison of reference UCR to sense voltage VSENS may be equivalent to comparing switch current $I_{SW}$ to a reference value ITH. For instance, the comparison of reference UCR to sense voltage VSENS may be equivalent to comparing and/or limiting the switch current $I_{SW}$ to a reference value ITH.

Edge-triggered SR latch 222 may provide a latch signal QDR in response to positive going edges at the set and reset inputs; additionally, the drive signal DR follows latch signal QDR. When oscillator signal OSC transitions high, latch signal QDR transitions high. Accordingly, the drive signal DR also transitions high to turn on primary switch S1. When comparator 218 changes state causing reset signal RST to transition high, latch signal QDR transitions low. Accordingly, the drive signal DR also transitions low to turn off primary switch S1.

Primary switch S1 is electrically coupled to a primary winding 232, and may provide switch current $I_{SW}$, having a periodic ramping waveform, in response to drive signal DR. Primary switch S1 may also be referred to as switch S1 and switch current $I_{SW}$ may also be referred to as primary switch current $I_{SW}$ without departing from the scope of this disclosure.

According to the teachings herein, the oscillator signal OSC has an oscillator on time TON_OSC and an oscillator off time TOFF_OSC. The oscillator period TOSC may be given by the sum of the oscillator on time TON_OSC and oscillator off time TOFF_OSC.

The drive signal DR has a drive on time TON_DR and a drive off time TOFF_DR. The drive period TDR may be given by the sum of the drive on time TON_DR and drive off time TOFF_DR.

As discussed above, comparator 218 may provide a reset signal RST in response to sense voltage VSENS exceeding reference UCR; and the sense voltage VSENS and reference UCR may be related and/or equivalent to primary current $I_{SW}$ and reference value ITH. Therefore, comparator 218 may provide reset signal RST (and drive signal DR) in response to switch current $I_{SW}$ exceeding a threshold value ITH.

As discussed herein, the drive on time TON_DR relates to and may be determined by the comparison of the switch current $I_{SW}$ to a threshold value ITH. Like reference UCR, threshold value ITH may be fixed and/or variable. For instance, the threshold value ITH may vary so that the switch current $I_{SW}$ is controlled according to ramp time modulation (RTM).

Alternatively, and additionally, the threshold value ITH may vary to stabilize a switching behavior of the drive signal DR. For instance, the threshold value ITH may vary to provide slope compensation. Accordingly, the drive on time TON_DR is related to the switch current $I_{SW}$ and the switch current $I_{SW}$ may determine the drive on time TON_DR (i.e., by equation EQ. 1).

$$TON_DR = TON_DR(I_{SW}) \qquad \text{EQ. 1}$$

The oscillator on time TON_OSC is controlled to be the larger of a fixed on time TON_FIX (e.g., four point four microseconds) and the drive on time TON_DR. Therefore, during a switching cycle (e.g., an oscillator switching cycle), the oscillator on time TON_OSC may be determined by the following equation EQ. 2.

$$TON_OSC = \begin{cases} TON_FIX & if \quad TON_FIX > TON_DR \\ TON_DR(I_{SW}) & if \quad TON_FIX \leq TON_DR \end{cases} \qquad \text{EQ. 2}$$

The off-time modulator 122 and behavioral off time modulation 214 may generate a signal having a modulation width TMOD. The modulation width TMOD may be a function of the output voltage VOUT. Alternatively, and additionally, the modulation width TMOD may be a function of a feedback signal (e.g., control current Ic) indicative of the output voltage VOUT. Accordingly, the modulation width TMOD may be determined by the control signal Ic (i.e., equation EQ. 3).

$$TMOD = TMOD(I_C) \qquad \text{EQ. 3}$$

The oscillator off time TOFF_OSC is controlled to be the larger of a fixed off time TOFF_FIX (e.g., two point two microseconds) and the modulation width TMOD. Therefore, during a switching cycle (e.g., an oscillator switching cycle), the oscillator off time TOFF_OSC may be determined by equation EQ. 4.

$$TOFF_OSC = \begin{cases} TOFF_FIX & if \quad TOFF_FIX > TMOD \\ TMOD(I_C) & if \quad TOFF_FIX \leq TMOD \end{cases} \qquad \text{EQ. 4}$$

According to the teachings herein, when a flyback converter 100 operates according to flyback control model 200 and according to equations EQ. 2 and EQ. 4 (i.e., control equations EQ. 2 and EQ. 4), then the gain G of frequency to control current Ic may be improved for control loop stability and range (i.e., range of control current Ic).

As shown in equation EQ. 5, gain G may be expressed as the derivative of frequency f with respect to control current Ic. As presented herein, when frequency f is controlled according to equation EQ. 2 and equation EQ. 4, then variations in gain G, as given by equation EQ. 5, may be advantageously reduced.

$$G = \frac{df}{dIc} \qquad \text{EQ. 5}$$

Also, as shown in equation EQ. 6, frequency f (i.e., the switching frequency f) may be conveniently expressed as the inverse of the oscillator period TOSC; since, as noted above the drive period TDR may equal the oscillator period TOSC.

$$f = \frac{1}{TDR} = \frac{1}{TOSC} \qquad \text{EQ. 6}$$

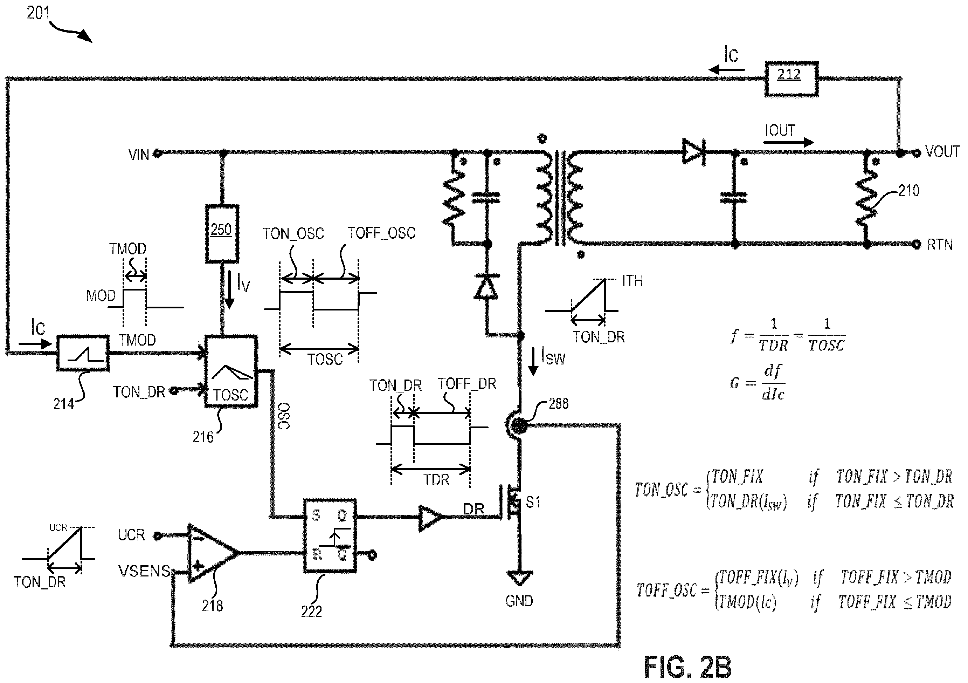

**FIG. 2B** illustrates a flyback control model 201 according to another embodiment of flyback converter 100. Unlike flyback control model 200, flyback control model 200 includes a feedforward element 250. Feedforward element 250 may be a behavioral representation of line interface circuit 116. Feedforward element 250 provides current Iv to the behavioral oscillator 216. Current Iv may be proportional to input voltage VIN. The behavioral oscillator may vary the fixed off time TOFF_FIX as a function of current Iv to reduce variations in output current IOUT as a function of the input voltage VIN. Accordingly, the fixed off time TOFF_FIX may be varied in response to variations in the input voltage VIN and equation EQ. 4 may be recast by equation EQ. 7.

$$TOFF_OSC = \begin{cases} TOFF_FIX(Iv) & if \quad TOFF_FIX > TMOD \\ TMOD(Ic) & if \quad TOFF_FIX \leq TMOD \end{cases} \qquad \text{EQ. 7}$$

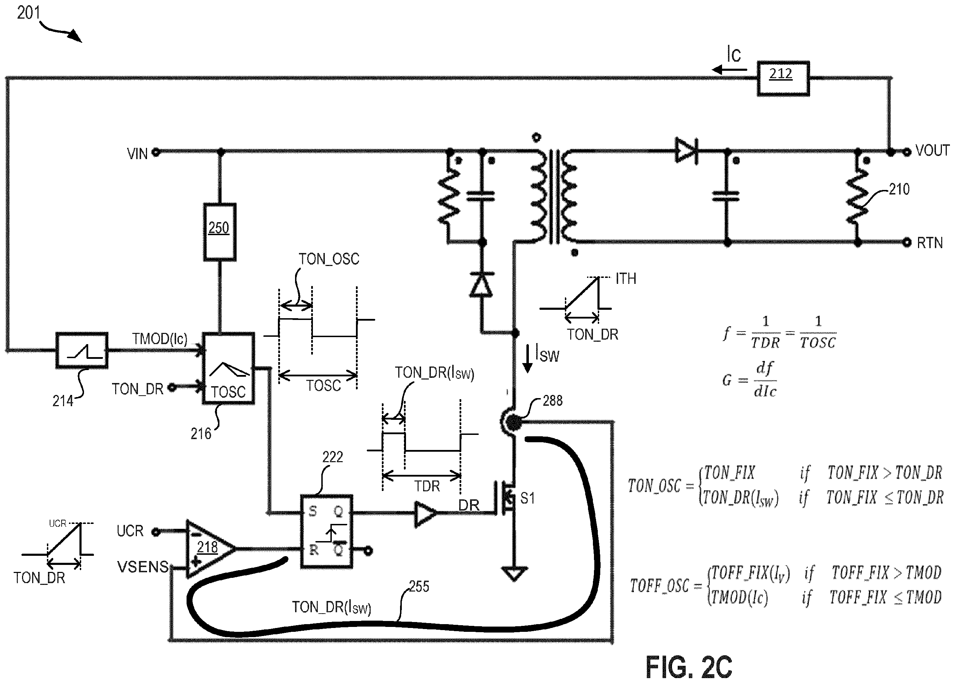

**FIG. 2C** illustrates a current control loop 255 of flyback control model 201. The current control loop 255 includes the behavioral current sense element 288 and comparator 218. The current control loop 255 may control the switch current $I_{SW}$ according to the reference UCR. For instance, the switch current $I_{SW}$ may be controlled according to peak current control, average current control, current limit, ramp time modulation, and the like.

Switch current $I_{SW}$ may be a function of system parameters and operating conditions. For instance, the primary winding 232 may give rise to magnetizing and/or parasitic inductance. Additionally, the switch current $I_{SW}$ may depend on input voltage VIN. Accordingly, the drive on time TON_DR depends, at least in part, on the switch current $I_{SW}$, which in turn, depends on system parameters and operating conditions.

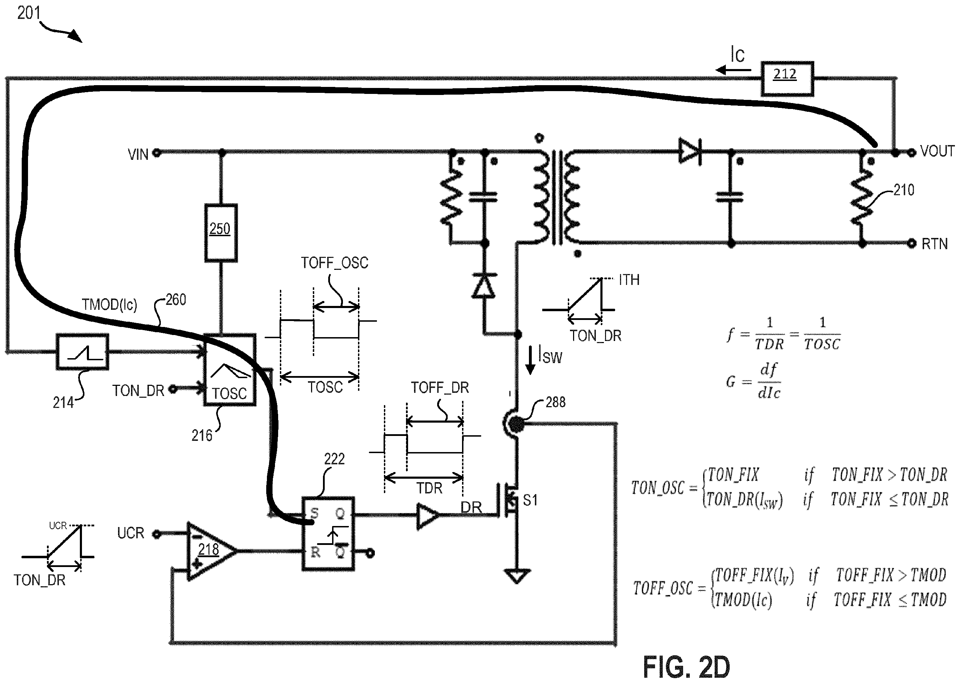

**FIG. 2D** illustrates a voltage control loop 260 of flyback control model 201. The voltage control loop 260 includes the behavioral feedback circuitry 212, behavioral off-time modulator 214, and behavioral oscillator 216. The voltage control loop 260 regulates the output voltage VOUT by means of negative feedback via the control current Ic. The control current Ic is a feedback signal indicative of the output voltage VOUT.

According to the teachings herein and equation EQ. 4, the output voltage VOUT may be regulated through the relationship of the modulation width TMOD as a function of control current Ic. Although the teachings herein are discussed with respect to regulating output voltage VOUT, other configurations are possible. For instance, the teachings may also be applied to regulating load current IOUT and/or regulating both load current IOUT and output voltage VOUT.

The behavioral oscillator 216 provides oscillator signal OSC to the set input of edge-triggered SR latch 222. Therefore, the oscillator period TOSC may be equal to the drive period TDR. Accordingly, a drive switching cycle (i.e., a drive period TDR) may begin concurrently with the oscillator switching cycle (i.e., an oscillator period TOSC). As one of skill in the art may appreciate, system delay may create a phase shift between the drive switching cycle and the oscillator switching cycle; however, the switching cycles may still run and/or begin concurrently.

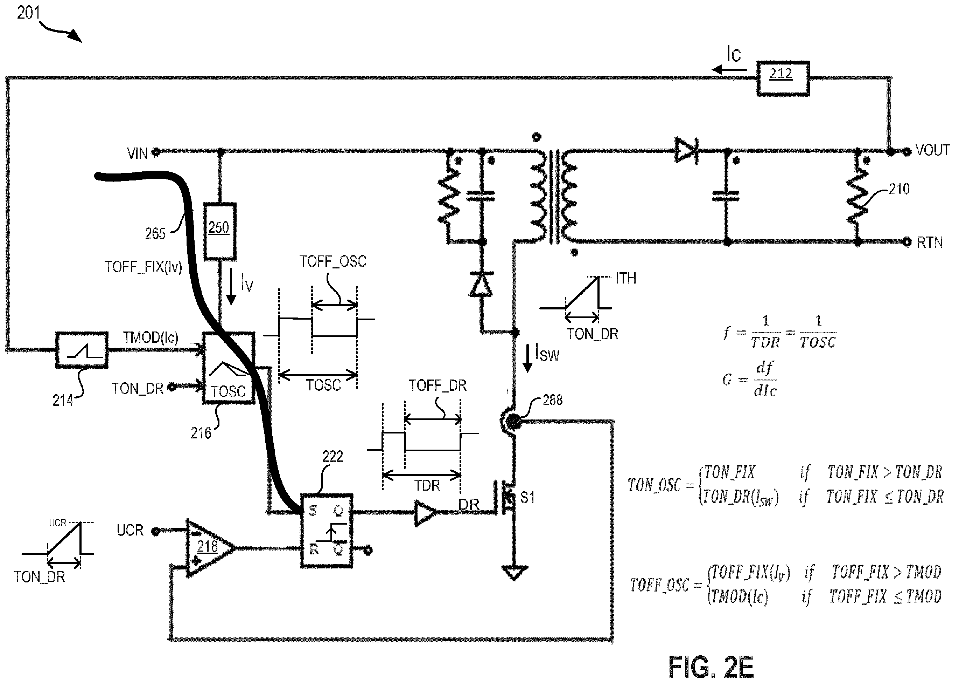

**FIG. 2E** illustrates a feedforward path 265 of flyback control model 201. The feedforward path 265 includes the feedforward element 250 and the behavioral oscillator 216. The feedforward path 265 allows the fixed oscillator off time TOFF_FIX to be dependent on the input voltage VIN (on current Iv). Feedforward may advantageously reduce variations in output power (i.e., improve load regulation) as a function of input voltage VIN.

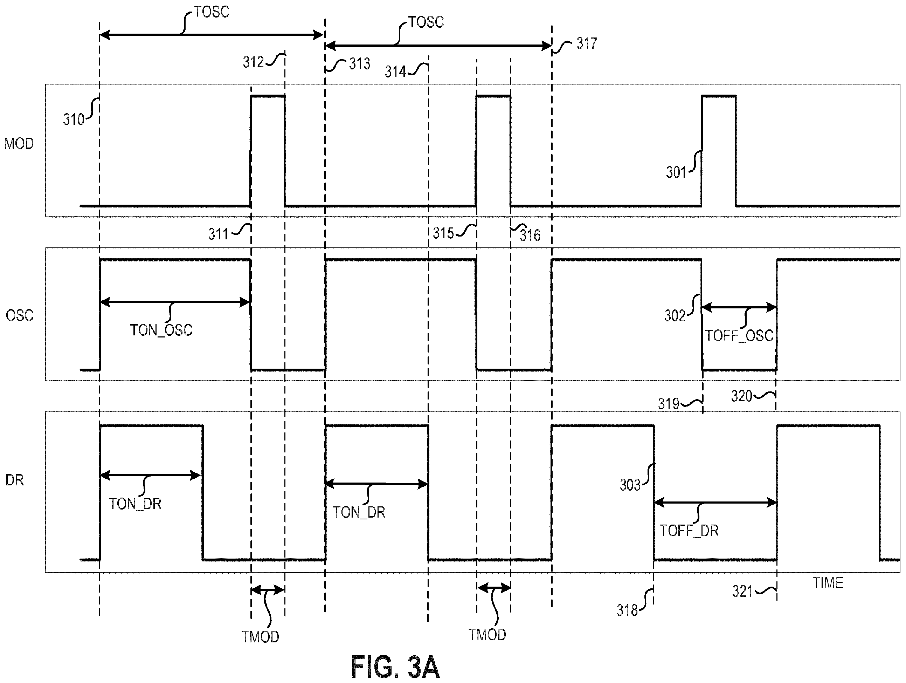

**FIG. 3A** illustrates waveforms 301-303 of a modulator signal MOD, oscillator signal OSC, and drive signal DR, respectively. The embodiment of FIG. 3A corresponds to an example maximum frequency condition. The modulation width TMOD is one microsecond (1us). The drive on time TON_DR is three microseconds (3us). The fixed on time TON_FIX is four point four microseconds (4.4us). The fixed off time TOFF_FIX is two point two microseconds (2.2us).

The waveforms 301-303 are plotted versus time over several switching periods of the oscillator. At time 310, time 313, and time 317, a drive switching cycle begins concurrently with the oscillator switching cycle. At time 311 the modulator signal MOD initiates a pulse of modulation width TMOD. According to the teachings herein, the off-time modulator 122 and behavioral off-time modulator 214 may modulate a signal (e.g., modulator signal MOD) during the oscillator off time TOFF_OSC. Accordingly, the modulator signal MOD exhibits a pulse between times 311-312 and pulse between times 315-316. The drive signal DR is exerted between times 313-314.

According to the teachings herein and equations EQ. 2, EQ. 4, and EQ. 7 (i.e., control equations EQ. 2, EQ. 4, and EQ. 7), the oscillator has a switching cycle and frequency determined by the fixed on time TON_FIX and fixed off time TOFF_FIX. The oscillator on time TON_OSC is equal to four point four microseconds (4.4us). The oscillator off time TOFF_OSC is equal to two point two microseconds (2.2us). The oscillator period TOSC is six point six microseconds (6.6us). The drive on time TON_DR is three microseconds (3us). The drive period TDR is six point six microseconds (6.6us).

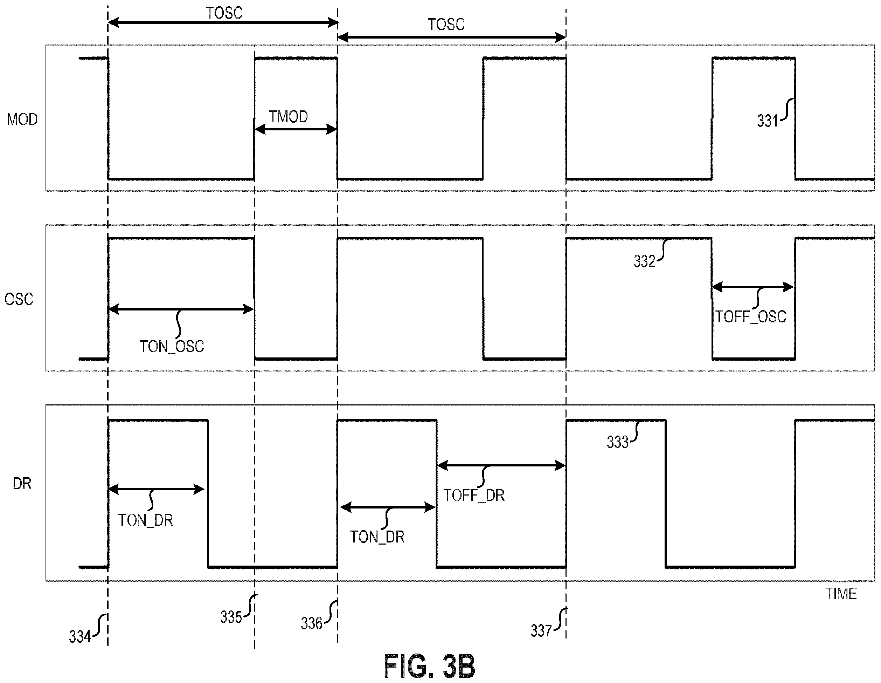

**FIG. 3B** illustrates waveforms 331-333 of a modulator signal MOD, oscillator signal OSC, and drive signal DR respectively. The embodiment of FIG. 3B corresponds to an example extended (i.e., modulated) oscillator off time condition. The modulation width TMOD is two point five microseconds (2.5us). The drive on time TON_DR is three microseconds (3us). The fixed on time TON_FIX is four point four microseconds (4.4us). The fixed off time TOFF_FIX is two point two microseconds (2.2us).

The waveforms 331-333 are plotted versus time over several switching periods of the oscillator. At time 334, time 336, and time 337, a drive switching cycle begins concurrently with the oscillator switching cycle. At time 335 the modulator signal MOD initiates a pulse of modulation width TMOD. According to the teachings herein, the off-time modulator 122 and behavioral off-time modulator 214 may modulate a signal (e.g., modulator signal MOD) during the oscillator off time TOFF_OSC. For instance, the modulator signal MOD exhibits a pulse between times 335-336.

According to the teachings herein and equations EQ. 2, EQ. 4, and EQ. 7, the oscillator has a switching cycle and frequency determined by the fixed on time TON_FIX and the modulation width TMOD. The oscillator on time TON_OSC is equal to four point four microseconds (4.4us). The oscillator off time TOFF_OSC is equal to two point five microseconds (2.5us). The oscillator period TOSC is equal to six point nine microseconds (6.9us). The drive on time TON_DR is equal to three microseconds (3us). The drive period TDR is equal to six point nine microseconds (6.9us).

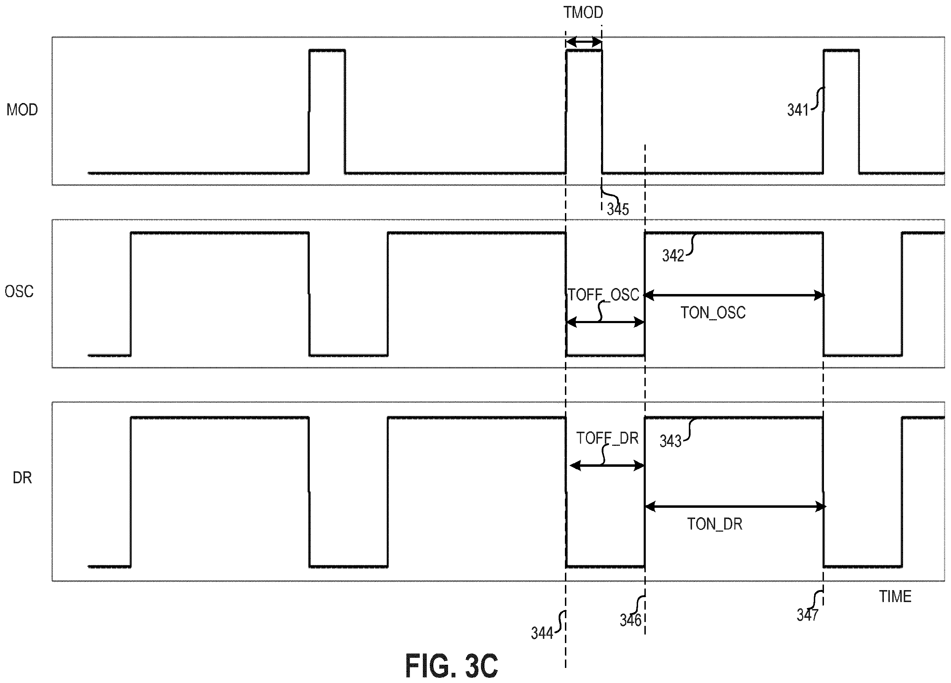

**FIG. 3C** illustrates waveforms 341-343 of a modulator signal MOD, oscillator signal OSC, and drive signal DR, respectively. The embodiment of FIG. 3C corresponds to an example extended oscillator on time condition. The modulation width TMOD is one microsecond (1us). The drive on time TON_DR is five microseconds (5us). The fixed on time TON_FIX is four point four microseconds (4.4us). The fixed off time TOFF_FIX is two point two microseconds (2.2us).

The waveforms 341-343 are plotted versus time over several switching periods of the oscillator. At time 346 a drive switching cycle begins concurrently with the oscillator switching cycle. At time 344 and at time 347 the modulator signal MOD initiates a pulse of modulation width TMOD. According to the teachings herein, the off-time modulator 122 and behavioral off-time modulator 214 may modulate a signal (e.g., modulator signal MOD) during the oscillator off time TOFF_OSC. For example, the modulator signal MOD exhibits a pulse between times 344-345.

According to the teachings herein and equations EQ. 2, EQ. 4, and EQ. 7, the oscillator has a switching cycle and frequency determined by the drive on time TON_DR and the fixed off time TOFF_FIX. The oscillator on time TON_OSC is equal to five microseconds (5us). The oscillator off time TOFF_OSC is equal to two point two microseconds (2.2us). The oscillator period TOSC is seven point two microseconds (7.2us). The drive on time TON_DR is five microseconds (5us). The drive period TDR is seven point two microseconds (7.2us).

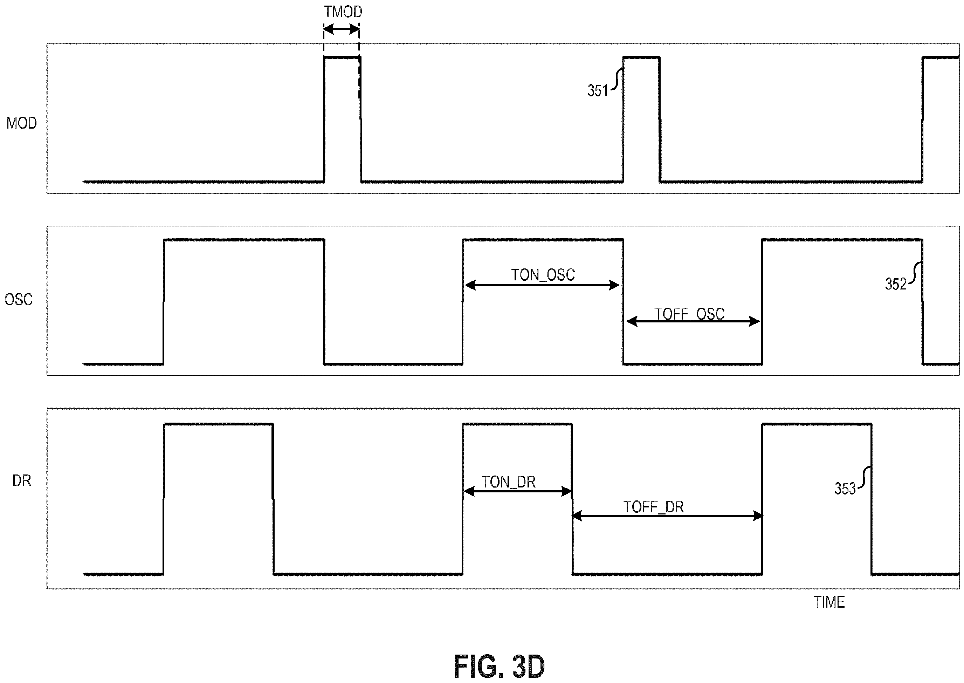

**FIG. 3D** illustrates waveforms 351-353 of a modulator signal MOD, oscillator signal OSC, and drive signal DR, respectively. The embodiment of FIG. 3D corresponds to an example increased fixed off time TOFF_FIX due to an increase of the input voltage VIN (i.e., due to feedforward). For instance, increase in fixed off time TOFF_FIX may correspond to the input voltage VIN increasing from one-hundred volts (100V) to four-hundred volts (400V). The modulation width TMOD is one microsecond (1us). The drive on time TON_DR is three microseconds (3us). The fixed on time TON_FIX is four point four microseconds (4.4us). The fixed off time TOFF_FIX is three point eight microseconds (3.8us).

The waveforms 351-353 are plotted versus time over several switching periods of the oscillator. According to the teachings herein and equations EQ. 2, EQ. 4, and EQ. 7, the oscillator has a switching cycle and frequency determined by the fixed on time TON_FIX and the fixed off time TOFF_FIX. The oscillator on time TON_OSC is equal to four point four microseconds (4.4us). The oscillator off time TOFF_OSC is equal to three point eight microseconds (3.8us). The oscillator period TOSC is equal to eight point two microseconds (8.2us). The drive on time TON_DR is three microseconds (3us). The drive period TDR is eight point two microseconds (8.2us).

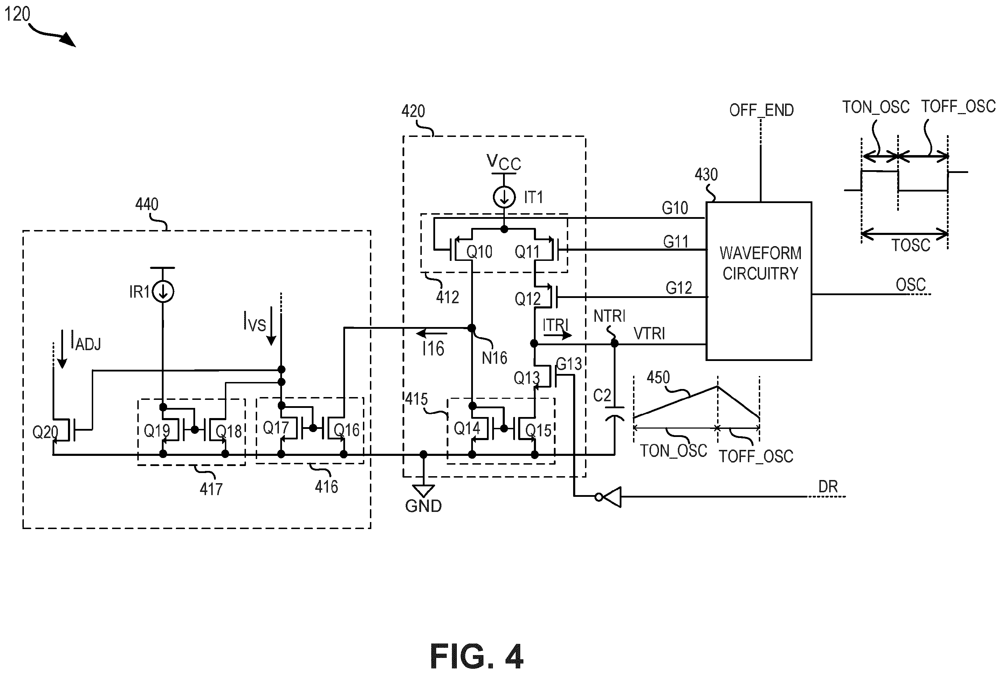

**FIG. 4** illustrates a circuit realization of oscillator 120 according to an embodiment of the present disclosure. Oscillator 120 includes a capacitor C2, a current steering stage 420, waveform circuitry 430, and a current controlled current source (CCCS) 440. Oscillator 120 receives supply power between ground GND and supply voltage VCC. Oscillator 120 receives drive signal DR and current $I_{VS}$ (feedforward signal $I_{VS}$) and provides oscillator signal OSC. Capacitor C2 is electrically connected (electrically coupled) between capacitor node NTRI and ground GND.

Current ITRI is sourced to (i.e., provided to) and sinked from (i.e., removed from) capacitor node NTRI to generate a current-controlled triangle wave. The voltage VTRI at capacitor node NTRI may exhibit waveforms having rising and falling segments (e.g., triangle waveform 450). Accordingly, oscillator 120 may also be referred to as a current controlled triangle wave generator 120 without departing from the scope of this disclosure.

Current steering stage 420 includes a differential pair 412, p-channel field effect transistor (PFET) Q12, n-channel field effect transistor (NFET) Q13, and current mirror 415. The differential pair 412 comprises PFET Q10, PFET Q11 and receives a current IT1. Current IT1 is a tail current for differential pair 412 and therefore may also be referred to as tail current IT1. The current mirror 415 comprises NFET Q14, NFET Q15 and is electrically coupled with differential pair 412 to steer a current ITRI at node NTRI. Current IT1, capacitance value of capacitor C2, and relative scaling of current mirror 415 may be tailored so that voltage VTRI presents a triangle waveform with rising and falling segments. Rising segments may have time duration equal to the fixed on time TON_FIX, and falling segments may have time duration equal to the fixed off time TOFF_FIX.

According to the teachings herein, the oscillator on time TON_OSC and oscillator off time TOFF_OSC, may be determined, at least in part, by rising segments and falling segments. As discussed herein, the oscillator on time TON_OSC and oscillator off time TOFF_OSC may also be extended beyond the duration of the rising and/or falling segments.

Control signals G10-G13 are provided respectively to the gates of PFET Q10, PFET Q11, PFET Q12, and NFET Q13. Control signal G13 follows drive signal DR except its waveform may be inverted (i.e., equation EQ. 8).

$$G13 = \overline{DR} \qquad \text{EQ. 8}$$

Accordingly, control signal G13 may be exerted to extend a duration of the oscillator on time TON_OSC in relation to the drive on time TON_DR.

Waveform circuitry 430 may comprise logic circuitry (e.g., combinational logic, sequential logic, gates, and the like). Waveform circuitry 430 may receive a signal OFF_END. Signal OFF_END may be exerted high during the oscillator off time TOFF_OSC to indicate the completion of a modulator pulse. For instance, with reference to waveform 301, signal OFF_END may be exerted high after time 312 and after time 316.

In response, waveform circuitry 430 provides control signals G10-G12 to the current steering stage 420 so that voltage VTRI becomes a controllable triangle wave with extendable rise and/or extendable fall times. Waveform circuitry 430 also receives voltage VTRI, and in response provides oscillator signal OSC having oscillator on time TON_OSC and oscillator off time TOFF_OSC.

Current controlled current source (CCCS) 440 comprises current mirrors 416-417 and NFET Q20. CCCS 440 receives current $I_{VS}$. Current mirrors 416-417 may compare reference current IR1 with current $I_{VS}$, and in response sink a current I16 at node N16. NFET Q20 may provide a current $I_{ADJ}$ in response to current $I_{VS}$.

With regards to feedforward, CCCS 440 may sink current I16 so that the current steering stage 420 varies a falling segment slope of triangle wave 450. For instance, in response to an increase in current $I_{VS}$, the downward slope of triangle wave 450 (*i.e.*, the time derivative of voltage VTRI) may decrease; in turn the fixed off time TOFF_FIX may increase. In this way the fixed off time TOFF_FIX becomes a function of the input voltage VIN (i.e., equation EQ. 9).

$$TOFF_FIX = TOFF_FIX(Ivs) = TOFF_FIX(Iv) \qquad \text{EQ. 9}$$

Although FIG. 4 illustrates an analog triangle-wave approach to generating oscillator signal OSC, other configurations are possible. For instance, an oscillator signal OSC may be implemented using a digital approach. A microcontroller with digital counters and/or digital signal processing features may be used to generate an oscillator signal OSC based, at least in part, on timing waveforms of the drive signal DR.

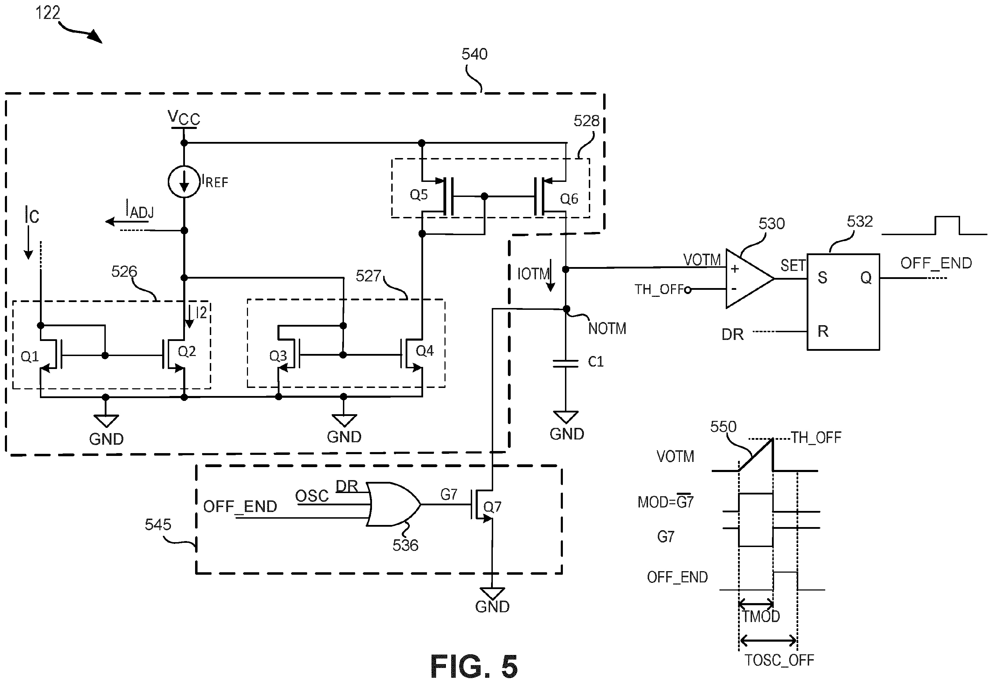

**FIG.** 5 illustrates a circuit realization of off-time modulator 122 according to an embodiment of the present disclosure. Off-time modulator 122 includes a capacitor C1, pulldown circuitry 545, a CCCS 540, a comparator 530, and an SR latch 532. Off-time modulator 122 receives supply power between ground GND and supply voltage VCC. Off-time modulator 122 receives drive signal DR, oscillator signal OSC, control current Ic and provides signal OFF_END.

Capacitor C1 is electrically connected (electrically coupled) between capacitor node NOTM and ground GND. Current IOTM is sourced to capacitor C1 (at capacitor node NOTM) to generate a sawtooth ramp. For instance, voltage VOTM may follow a sawtooth waveform when current IOTM has a constant current value. Accordingly, off-time modulator 122 may be referred to as a sawtooth generator 122 without departing from the scope of this disclosure.

Pulldown circuitry 545 comprises OR gate 536 and NFET Q7, and pulls capacitor node NOTM to ground GND when any of drive signal DR, oscillator signal OSC, or signal OFF_END is high. The OR gate 536 exerts control signal G7 to the gate of NFET Q7 according to the logical OR of three input signals: drive signal DR, oscillator signal OSC, and signal OFF_END.

As discussed with reference to FIG. 2A-FIG. 2D, a modulator signal MOD may be identified as the logical inverse of control signal G7 (*i.e.*, equation EQ. 10).

$$MOD = \overline{G7} \qquad \text{EQ. 10}$$

During the oscillator off time TOFF_OSC, both the oscillator signal OSC and drive signal DR may be exerted low. Accordingly, voltage VOTM may ramp (i.e., have positive slope) according to a sawtooth wave (e.g., sawtooth waveform 550) during the oscillator off time TOFF_OSC.

Signal OFF_END may be optionally removed as an input to OR gate 536 if SR latch 532 is reset dominate. Under this optional condition, the voltage VOTM may ramp for the complete duration of the oscillator off time TOFF_OSC.

CCCS 540 comprises current mirrors 526-528. Current mirror 526 comprises NFETs Q1-Q2. NFET Q1 is diode connected (i.e., gate is connected to drain) and receives control current Ic. NFET Q2 mirrors control current Ic to compare control current Ic to a reference current $I_{REF}$.

The difference of control current Ic and reference current $I_{REF}$ is provided to current mirror 527. Current mirror 527 comprises NFETs Q3-Q4. NFET Q3 is diode connected (i.e., gate is connected to drain) and may receive the difference (comparison) of control current Ic and reference current $I_{REF}$. Current mirror 528 comprises PFETs Q5-Q6 and is coupled to current mirror 527 so that PFET Q6 provides current IOTM. Current IOTM may be a mirrored current proportional to the difference (comparison) of control current Ic and reference current $I_{REF}$.

Therefore, CCCS 540 may source current IOTM in response to the control current Ic and, more specifically, in proportion to a difference of the control current Ic and a reference current $I_{REF}$. Accordingly, during the oscillator off time TOFF_OSC, voltage VOTM may follow a sawtooth waveform having a slope dependent, at least in part, on the control current Ic. Optionally, current $I_{ADJ}$ may be sinked at the drain of NFET Q2 to reduce and or modulate the magnitude of reference current $I_{REF}$.

Comparator 530 compares voltage VOTM at a non-inverting input to a modulation reference TH_OFF at an inverting input and provides signal SET to the set input of SR latch 532. According to the embodiment of FIG. 5, the modulation width TMOD is the time interval during which voltage VOTM is less than modulation reference TH_OFF. Modulation reference TH_OFF may be a temperature stable reference TH_OFF (e.g., a bandgap reference). Therefore, in addition to depending on control current Ic and a capacitance of capacitor C1, the modulation width TMOD may also be determined, at least in part, by the modulation reference TH_OFF.

Additionally, the capacitance of capacitor C1, the reference current $I_{REF}$, the scaling of current mirrors 526-528, and the modulation reference TH_OFF may determine the modulation width TMOD as a function of control current Ic. In response to voltage VOTM reaching and/or exceeding modulation reference TH_OFF, comparator 530 exerts signal SET high.

SR latch 532 receives signal SET and drive signal DR at the set and reset inputs, respectively. In response, SR latch 532 provides signal OFF_END. Drive signal DR resets latch 532 during the oscillator on time TON_OSC. Signal SET is exerted high during the oscillator off time TOFF_OSC after a time interval determined by the modulation width TMOD. Therefore, signal OFF_END is exerted high by SR latch 532 after the duration of the modulation width TMOD.

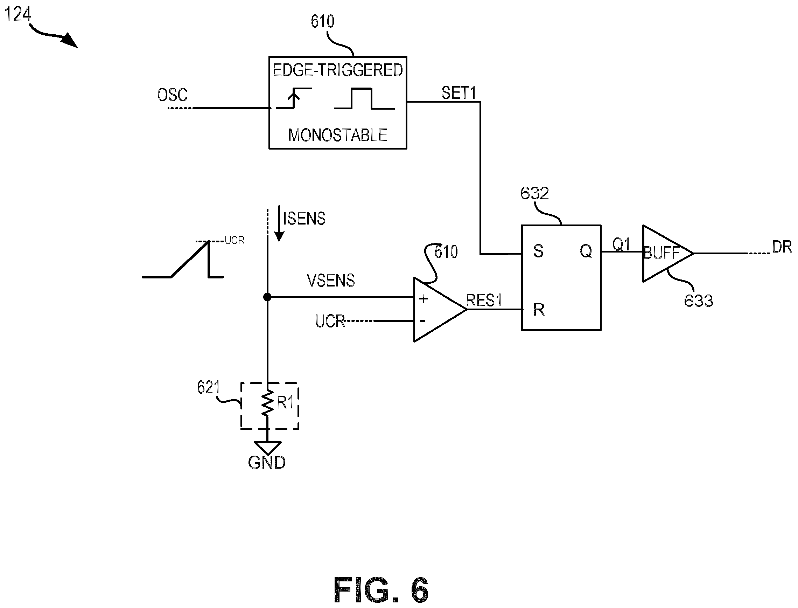

**FIG. 6** illustrates a circuit realization of control logic 124 according to an embodiment of the present disclosure. Control logic 124 receives signal ISENS, oscillator signal OSC, and provides drive signal DR. Control logic 124 includes a monostable 510, a current to voltage converter 621, a comparator 610, an SR latch 632, and a buffer 633. Buffer 633 may provide drive signal DR as a buffered replica of signal Q1.

Monostable 510 receives oscillator signal OSC and provides a pulse signal SET1 to the set input of SR latch 632 in response to a rising edge of oscillator signal OSC. Accordingly, the SR latch 632 exerts signal Q1, and consequently drive signal DR, high when the oscillator signal OSC transitions high. In this way a switching cycle of drive switching signal DR may begin concurrently with the oscillator switching cycle.

Current to voltage converter 621 may comprise resistor R1 to provide sense voltage VSENS to the noninverting input of comparator 610. Comparator 610 compares sense voltage VSENS to reference UCR and provides signal RES1 to the reset input of SR latch 632. As discussed above with regards to comparator 218, comparing sense voltage VSENS to reference UCR may control the switch current $I_{SW}$ relative to a threshold value ITH. Accordingly, SR latch 632 exerts signal Q1, and consequently drive signal DR, low when switch current $I_{SW}$ reaches and/or exceeds a threshold value ITH.

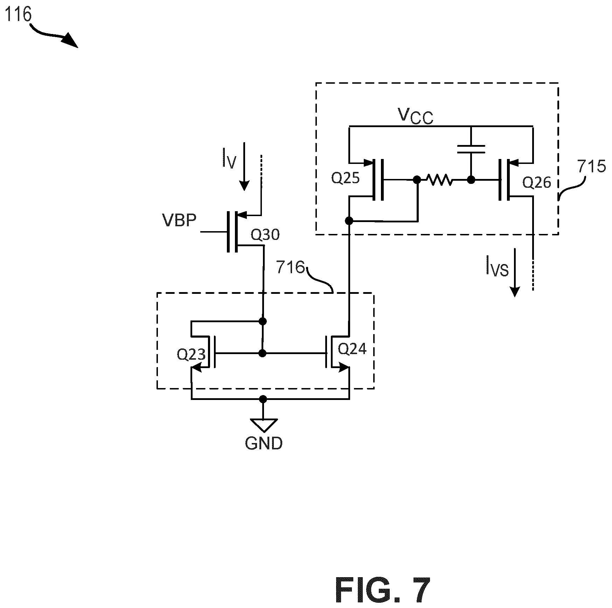

**FIG. 7** illustrates a circuit realization of line interface circuit 116 according to an embodiment of the present disclosure. Line interface circuit 116 receives supply power between ground GND and supply voltage VCC. Line interface circuit 116 receives current Iv and provides current $I_{VS}$ in proportion to current Iv. Line interface circuit 116 includes PFET Q30 and current mirrors 715-716. PFET Q30 receives a gate bias VBP and sinks current Iv from source to drain. Current mirror 716 comprises NFETs Q23-Q24. Current mirror 715 comprises PFETs Q25-Q26. PFET Q30, current mirror 716, and current mirror 715 are electrically coupled so that current $I_{VS}$, sourced from the drain of PFET Q26, is a scaled replica of current Iv.

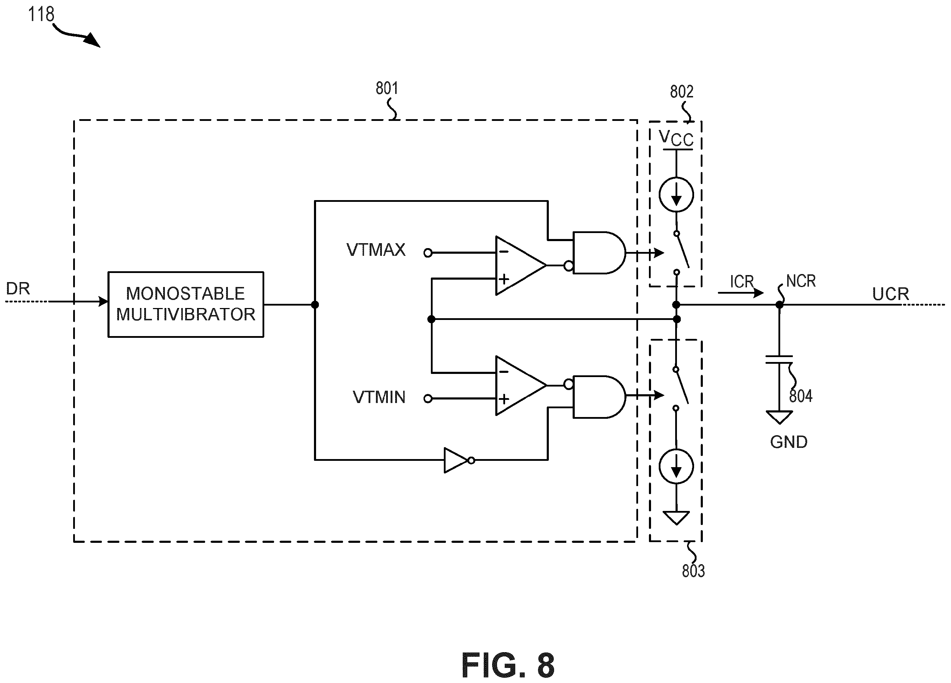

**FIG. 8** illustrates a gate-level circuit realization of switch current reference generator 118 according to an embodiment of the present disclosure. Switch current reference generator 118 receives supply power between ground GND and supply voltage VCC. Switch current reference generator 118 receives drive signal DR and provides reference UCR at node NCR. Switch current reference generator 118 includes logic circuitry 801, switched current 802, switched current 803, and capacitor 804. Capacitor 804 is connected between node NCR and ground GND.

Logic circuitry 801 may drive switched current 802 and switched current 803 according to a switching cycle of drive signal DR and according to voltage references VTMAX, VTMIN. In response, switched current 802 and switched current 803 may sink and/or source current ICR at node NCR so that reference UCR varies. Reference UCR may vary according to ramp time modulation (RTM).

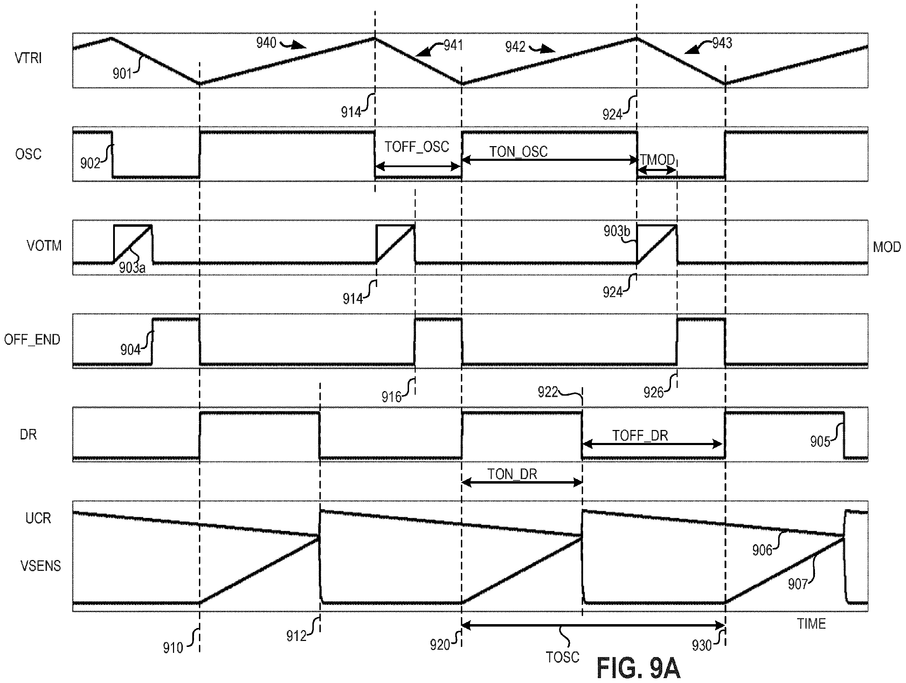

**FIG. 9A** illustrates waveforms 901-902,903a-b,904-907 of voltage VTRI, oscillator signal OSC, voltage VOTM, modulator signal MOD, signal OFF_END, drive signal DR, reference UCR, and sense voltage VSENS. The embodiment of FIG. 9A corresponds to an example maximum frequency condition. The modulation width TMOD is one microsecond (1us). The drive on time TON_DR is three microseconds (3us). The fixed on time TON_FIX is four point four microseconds (4.4us). The fixed off time TOFF_FIX is two point two microseconds (2.2us).

The waveforms 901-902,903a-b,904-907 are plotted versus time over several switching periods (i.e., switching cycles) of the oscillator. For instance, one oscillator switching period (cycle) is shown from time 920 to time 930 with oscillator period TOSC. With reference to FIG. 4, waveform 901 (voltage VTRI) exhibits a triangle wave with rising segments 940, 942 and falling segments 941, 943. Rising segment 940 is illustrated between time 910 and time 914. Rising segment 942 is illustrated between time 920 and time 924. Falling segment 941 is illustrated between time 914 and time 920. Falling segment 943 is illustrated between time 924 and time 930.

Waveform 902 (oscillator signal OSC) is a rectangular waveform. Oscillator signal OSC is high while the triangle wave exhibits rising segments 940, 942. Oscillator signal OSC is low while the triangle wave exhibits falling segments 941, 943.

With reference to FIG. 5, waveform 903a (voltage VOTM) exhibits a sawtooth waveform. For instance, waveform 903a increases with a sawtooth segment between time 914 and time 916 and between time 924 and time 926. The duration between time 914 (924) and time 916 (926) is the modulation width TMOD. As stated above with respect to the discussion of FIG. 5, waveform 903a is consistent with the configuration of OR gate 536.

With reference to FIG. 5 and FIG. 2B, waveform 903b (modulator signal MOD) exhibits a pulse waveform and may have a different y-axis scale than that of waveform 903a. For instance, waveform 903b exhibits a pulse between time 914 and time 916 and between time 924 and time 926.

With reference to FIG. 5 and FIG. 2B, waveform 904 (signal OFF_END) exhibits a pulse waveform indicating the completion of modulation. Here "completion of modulation" refers to the completion of the pulses between 914 (924) and time 916 (926).

Waveform 904 exhibits a pulse for the remainder of the oscillator off time TOSC_OFF. For instance, waveform 904 (signal OFF_END) remains high from time 916 to time 920 and from time 926 to time 930.

According to the teachings herein, oscillator 120 of FIG. 4 may receive signal OFF_END to determine the state of the off-time modulator 122 and to assert oscillator signal OSC according to equations EQ. 2, EQ. 4, and EQ. 7.

In this case the modulation width TMOD (1us) is less than the fixed off time TOFF_FIX (2.2us); therefore, according to equations EQ. 2, EQ. 4, and EQ. 7, the oscillator off time TOSC_OFF is controlled by waveform 901 to be the fixed off time TOFF_FIX (2.2us).

With reference to FIG. 6 and FIG. 2B, waveform 905 (drive signal DR) is determined, at least in part, by waveform 906 (reference UCR) and waveform 907 (sense voltage VSENS). At time 912 and time 922 the sense voltage VSENS reaches and/or exceeds the reference UCR. Therefore, comparator 218 and/or comparator 610 changes state and drive signal DR transitions from high to low. The reference UCR may vary according to RTM. For instance, waveform 906 monotonically decreases during a switching cycle (e.g., during a drive switching cycle). As the sense voltage VSENS is related to the switch current $I_{SW}$, the drive on time TON_DR may be determined by the switch current $I_{SW}$ relative to a reference value ITH. The drive on time TON_DR (3us) is less than the fixed on time TON_FIX (4.4us).

The oscillator on time TON_OSC is greater than or equal to the fixed on time TON_FIX. Thus, in accordance with the teachings herein, waveform 902 (oscillator signal OSC) transitions low at time 914 and at time 924 so that the oscillator on time TON_OSC is equal to the fixed on time TON_FIX.

Accordingly, the oscillator has a switching cycle and frequency determined by the fixed on time TON_FIX and fixed off time TOFF_FIX. The oscillator on time TON_OSC is equal to four point four microseconds (4.4us). The oscillator off time TOFF_OSC is equal to two point two microseconds (2.2us). The oscillator period TOSC is six point six microseconds (6.6us). The drive on time TON_DR is three microseconds (3us). The drive period TDR is six point six microseconds (6.6us).

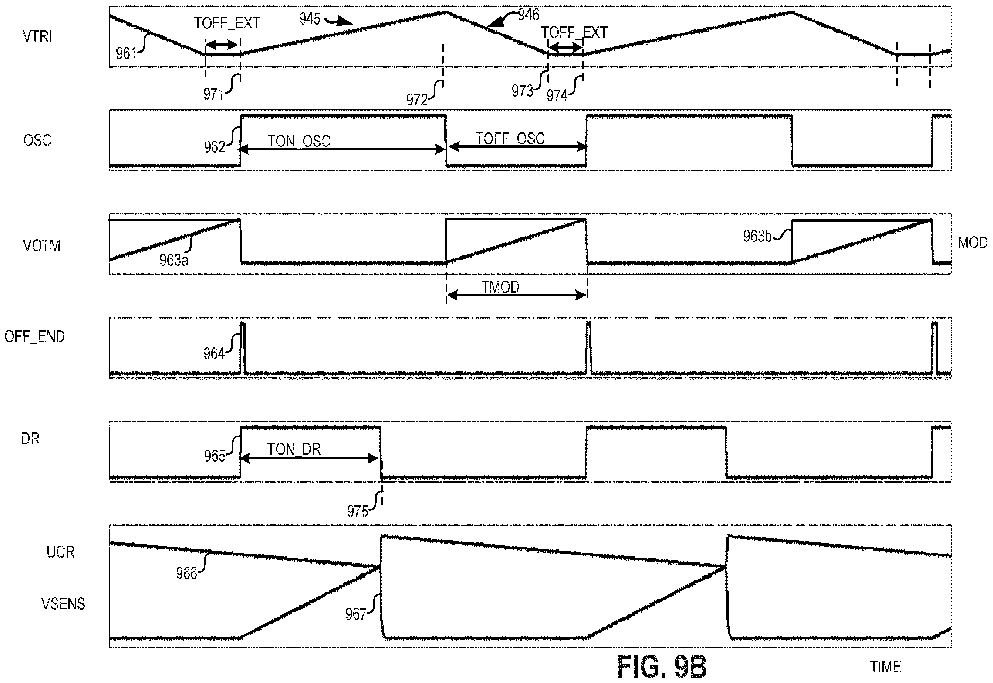

**FIG. 9B** illustrates waveforms 961-962,963a-b,964-967 of voltage VTRI, oscillator signal OSC, voltage VOTM, modulator signal MOD, signal OFF_END, drive signal DR, reference UCR, and sense voltage VSENS. The embodiment of FIG. 9B corresponds to an extended (i.e., modulated) oscillator off time condition. The modulation width TMOD is four microseconds (4us). The drive on time TON_DR is three microseconds (3us). The fixed on time TON_FIX is four point four microseconds (4.4us). The fixed off time TOFF_FIX is two point two microseconds (2.2us).

The waveforms 961-962,963a-b,964-967 are plotted versus time over several switching periods (i.e., switching cycles) of the oscillator. For instance, one oscillator switching period (cycle) is shown from time 971 to time 974. With reference to FIG. 4, waveform 961 (voltage VTRI) exhibits a triangle wave with rising segments (e.g., rising segment 945) and falling segments (e.g., falling segment 946). Rising segment 945 is illustrated between time 971 and time 972.

According to the teachings herein, falling segment 946 is extended in duration with off time extension TOFF_EXT. The falling segment 946 starts at time 972 and voltage VTRI falls until time 973 for a duration equal to the fixed off time TOFF_FIX. Then voltage VTRI is held low (extended) until the start of a subsequent switching cycle at time 974. In response to signal OFF_END, the oscillator 120 extends the falling segment from time 973 to time 974.

Accordingly, the oscillator off time TOFF_OSC is determined (extended) by the off time extension TOFF_EXT to be equal to that of the modulation width TMOD. In this way the oscillator off time TOFF_OSC is determined, at least in part, by the duration of the falling segment 946 and a duration of the transition to the subsequent cycle rising segment (the off time extension TOFF_EXT).

Waveform 962 (oscillator signal OSC) is a rectangular waveform. Oscillator signal OSC is high while the triangle wave exhibits rising segments (e.g., rising segment 945). Oscillator signal OSC is low while the triangle wave exhibits a falling segment (e.g., falling segment 946) and during the off time extension TOFF_EXT.

With reference to FIG. 5, waveform 963a (voltage VOTM) exhibits a sawtooth waveform. For instance, waveform 963a increases with a sawtooth segment between time 972 and time 974. The duration between time 972 and time 974 is the modulation width TMOD. As stated above with respect to the discussion of FIG. 5, waveform 963a is consistent with the configuration of OR gate 536.

With reference to FIG. 5 and FIG. 2B, waveform 963b (modulator signal MOD) exhibits a pulse waveform and may have a different y-axis scale than that of waveform 963a. For instance, waveform 963b exhibits a pulse between time between time 972 and time 974.

With reference to FIG. 5 and FIG. 2B, waveform 964 (signal OFF_END) exhibits a pulse waveform indicating the completion of modulation. Here "completion of modulation" refers to the completion of a pulse during the oscillator off time TOFF_OSC. For instance, waveform 963b completes modulation at time 974.

Because the modulation width TMOD (4us) is greater than the fixed off time (2.2us) waveform 964 exhibits a narrow pulse of short duration (e.g., ten nanoseconds). In this case the modulation width TMOD (4us) is greater than the fixed off time TOFF_FIX (2.2us). Therefore, according to equations EQ. 2, EQ. 4, and EQ.7, the oscillator off time TOSC_OFF is determined by waveform 963a-b and is extended so as to equal the modulation width TMOD.

With reference to FIG. 6 and FIG. 2B, waveform 965 (drive signal DR) is determined by waveform 966 (reference UCR) and waveform 967 (sense voltage VSENS). The drive on time TON_DR (3us) is less than the fixed on time TON_FIX (4.4us). As illustrated waveform 965 may transition low at time 975; and the behavior of waveforms 965-967 is similar to that of waveforms 905-907.

According to the teachings herein and equations EQ. 2, EQ. 4, and EQ.7, the oscillator has a switching cycle and frequency determined by the fixed on time TON_FIX (4.4us) and the modulation width TMOD (4us). The oscillator on time TON_OSC is equal to four point four microseconds (4.4us). The oscillator off time TOFF_OSC is equal to four microseconds (4us). The oscillator period TOSC is eight point four microseconds (8.4us). The drive on time TON_DR is three microseconds (3us). The drive period TDR is eight point four microseconds (8.4us).

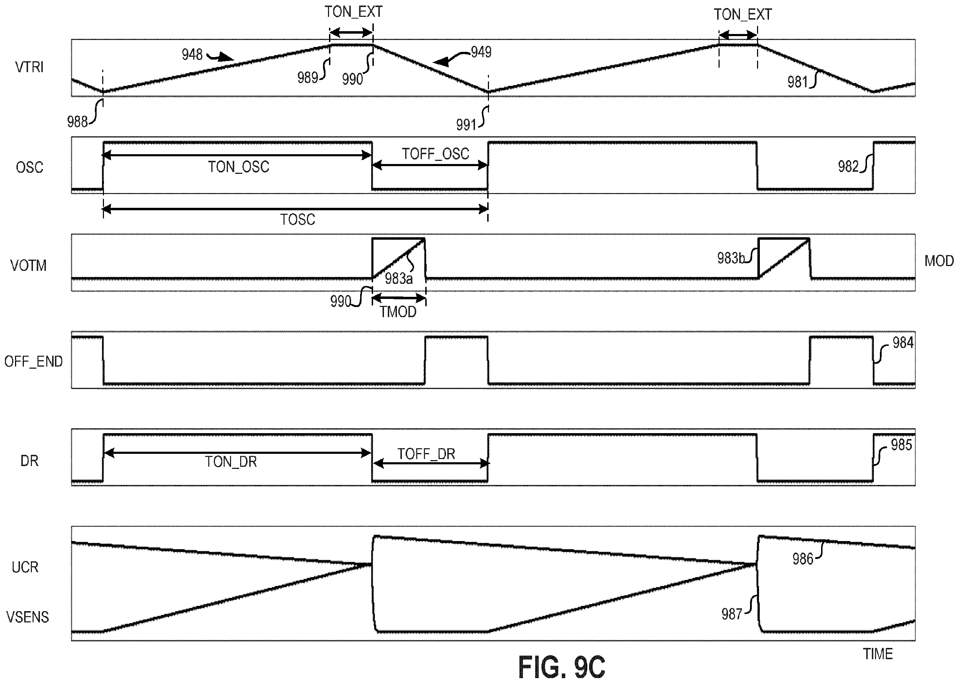

**FIG. 9C** illustrates waveforms 981-982,983a-b,984-987 of voltage VTRI, oscillator signal OSC, voltage VOTM, modulator signal MOD, signal OFF_END, drive signal DR, reference UCR, and sense voltage VSENS. The embodiment of FIG. 9C corresponds to an example extended oscillator on time condition. The modulation width TMOD is one microsecond (1us). The drive on time TON_DR is five point one microseconds (5.1us). The fixed on time TON_FIX is four point four microseconds (4.4us). The fixed off time TOFF_FIX is two point two microseconds (2.2us).

The waveforms 981-982,983a-b,984-987 are plotted versus time over several switching periods (i.e., switching cycles) of the oscillator. For instance, one oscillator switching period (cycle) is shown from time 988 to time 991. With reference to FIG. 4, waveform 981 (voltage VTRI) exhibits a triangle wave with rising segments (e.g., rising segment 948) and falling segments (*e.g.*, falling segment 949).

According to the teachings herein, rising segment 948 is extended. Rising segment 948 starts at time 988 so that waveform 981 (voltage VTRI) rises until time 989 for a duration equal to the fixed on time TON_FIX. In response to waveform 985 (drive signal DR) remaining high, the oscillator 120 holds waveform 981 high from time 989 to time 990. The duration from time 989 to time 990 is an on time extension TON_EXT which extends the oscillator on time TON_OSC to equal the drive on time TON_DR.

Accordingly, the oscillator on time TON_OSC may be determined by the duration of the rising segment 948 and a duration of the transition time to the falling segment 949. Waveform 982 (oscillator signal OSC) is a rectangular waveform. Oscillator signal OSC is high while the triangle wave exhibits a rising segment (e.g., rising segment 948) and during the on time extension TON_EXT. The rising segment 948 from time 988 to time 989 may be of duration equal to the fixed on time TON_FIX. The on time extension TON_EXT extends the oscillator on time TON_OSC to equal the drive on time TON_DR. As discussed above with regards to FIG. 9A and FIG. 9B, oscillator signal OSC is low while the triangle wave exhibits a falling segment (e.g., falling segment 949).

The discussion of waveforms 983a, 983b, 984-987 is similar to that of discussion of waveforms 903a, 903b, 904-907.

According to the teachings herein and equations EQ. 2, EQ. 4, and EQ. 7, the oscillator has a switching cycle and frequency determined by the drive on time TON_DR (5.1us) and fixed off time TOFF_FIX (2.2us). The oscillator on time TON_OSC is equal to five point one microseconds (5.1us). The oscillator off time TOFF_OSC is equal to two point two microseconds (2.2us). The oscillator period TOSC is seven point three microseconds (7.3us). The drive on time TON_DR is five point one microseconds (5.1us). The drive period TDR is seven point three microseconds (7.3us).

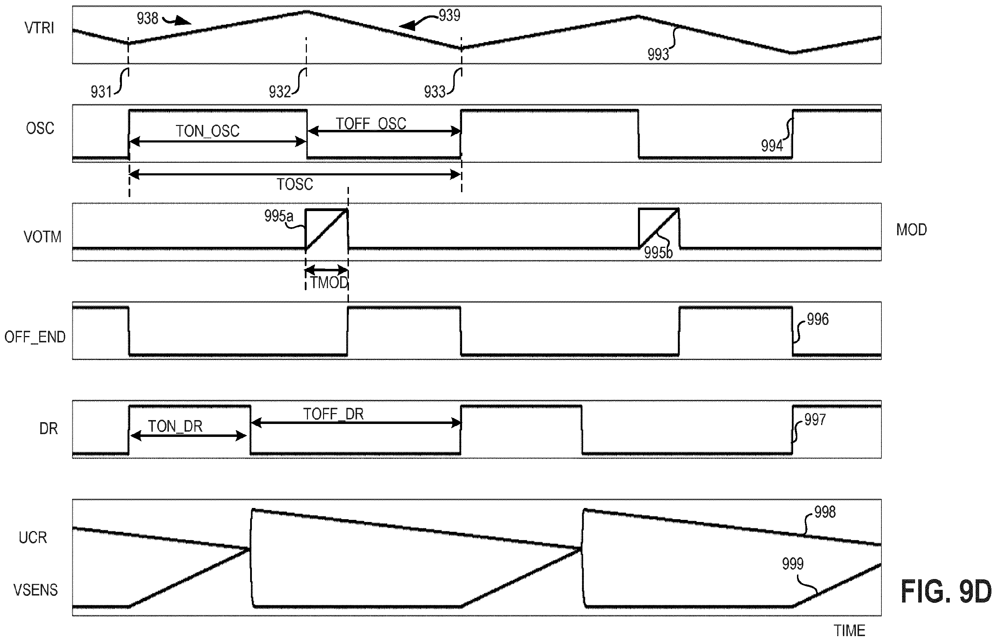

**FIG. 9D** illustrates waveforms 993-994,995a-b,996-999 of voltage VTRI, oscillator signal OSC, voltage VOTM, modulator signal MOD, signal OFF_END, drive signal

DR, reference UCR, and sense voltage VSENS. The embodiment of FIG. 9D corresponds to an example of increased fixed off time TOFF_FIX due to an increase of the input voltage VIN (i.e., due to feedforward). The modulation width TMOD is one microsecond (1us). The drive on time TON_DR is three microseconds (3us). The fixed on time TON_FIX is four point four microseconds (4.4us). The fixed off time TOFF_FIX is three point eight microseconds (3.8us). The increased value of fixed off time may correspond to the input voltage VIN having increased from one-hundred volts (100V) to four-hundred volts (400V).

The discussion of waveforms 993-994, 995a-b, 996-999 is similar to that of waveforms 901-902,903a-b,904-907 except the fixed off time TOFF_FIX has increased due to the dependence on current Iv.

Like that of FIG. 9A, the oscillator on time TON_OSC from time 931 to time 932 is determined by the fixed on time TON_FIX, which is the duration of rising segment 938. Also, like that of FIG. 9A, the oscillator off time TOFF_OSC from time 932 to time 933 is determined by the fixed off time TOFF_FIX, which is the duration of falling segment 939. However, unlike that of FIG. 9A, the magnitude of the slope (i.e., the time derivative of voltage VTRI) has been decreased so the duration of falling segment 939 (i.e., the fixed off time TOFF_FIX) has increased in response to current Iv.

According to the teachings herein and equations EQ.2, EQ. 4, and EQ. 7, the oscillator has a switching cycle and frequency determined by the fixed on time TON_FIX and fixed off time TOFF_FIX. The oscillator on time TON_OSC is equal to four point four microseconds (4.4us). The oscillator off time TOFF_OSC is equal to three point eight microseconds (3.8us). The oscillator period TOSC is eight point two microseconds (8.2us). The drive on time TON_DR is three microseconds (3us). The drive period TDR is eight point two microseconds (8.2us).

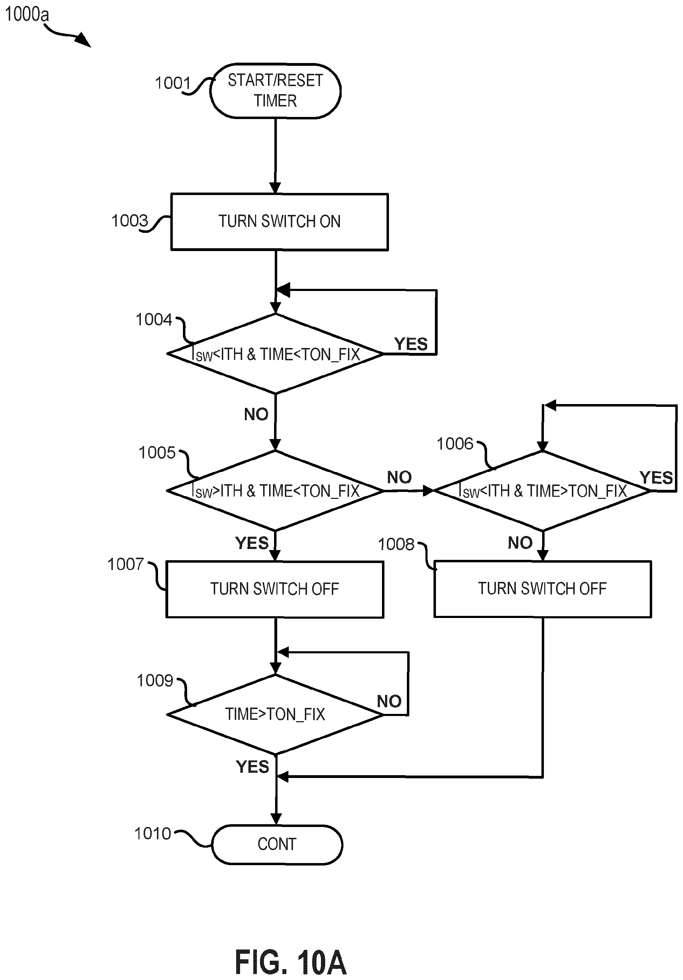

**FIG. 10A** illustrates a flowchart 1000a for driving a primary switch S1 and for determining oscillator turn on time TON_OSC according to the teachings herein. Flowchart 1000a may provide a time-based algorithm for implementing the flyback control models 200, 201 of FIGs. 2A-2E.

Although flowchart 1000a is described with respect to determining oscillator on time TON_OSC, it may also provide an algorithm for a software and/or digital implementation without requiring an oscillator signal. As one of skill in the art may appreciate, quantities such as output voltage VOUT, control current Ic, and input voltage VIN may be provided to a digital signal processor (DSP) and/or microcontroller using an analog to digital (A/D) converter.

Flowchart 1000a may follow from control relationships (i.e., equation EQ. 2). Step 1001 may correspond with the start of a switching cycle using a timer (e.g., a clock) and/or a counter. Step 1001 may correspond with the start of the switching cycle (e.g., an oscillator switching cycle). Counter TIME is reset and then begins to increase. Step 1003 may correspond with turning on a switch (e.g., a primary switch S1).

Decision step 1004 may correspond with aspects of current control loop 255. Variables such as the threshold value ITH and/or fixed on time TON_FIX may be programmed into a processor and/or determined during operation. While the switch current $I_{SW}$ is less than the threshold value ITH and the counter TIME is less than the fixed on time TON_FIX, remain at the decision step 1004. Otherwise continue to decision step 1005.

Decision step 1005 also relates to current control loop 255. If the switch current $I_{SW}$ greater than (or equal to) the threshold value ITH and counter TIME is less than the fixed on time TON_FIX, then proceed to step 1007. At step 1007 turn off the primary switch S1 and continue to decision step 1009.

At decision step 1009, while the counter TIME is less than (or equal to) the fixed on time TON_FIX, remain at step 1009. Otherwise proceed to step 1010 with counter TIME determined by the fixed on time TON_FIX.

Decision step 1006 also relates to current control loop 255 and to a condition where the drive on time TON_DR may exceed (be greater than) the fixed on time TON_FIX. While the switch current $I_{SW}$ is less than the threshold value ITH and counter TIME is greater than (or equal to) the fixed on time TON_FIX, remain at decision step 1006. Otherwise proceed to step 1008.

At step 1008 turn off the switch and proceed to step 1010 with counter TIME determined by the drive on time TON_DR. Step 1010 is a continuation step and may correspond with the condition that the counter TIME has reached a duration equal to the oscillator on time TON_OSC of equations EQ. 2, EQ. 4, and EQ. 7.

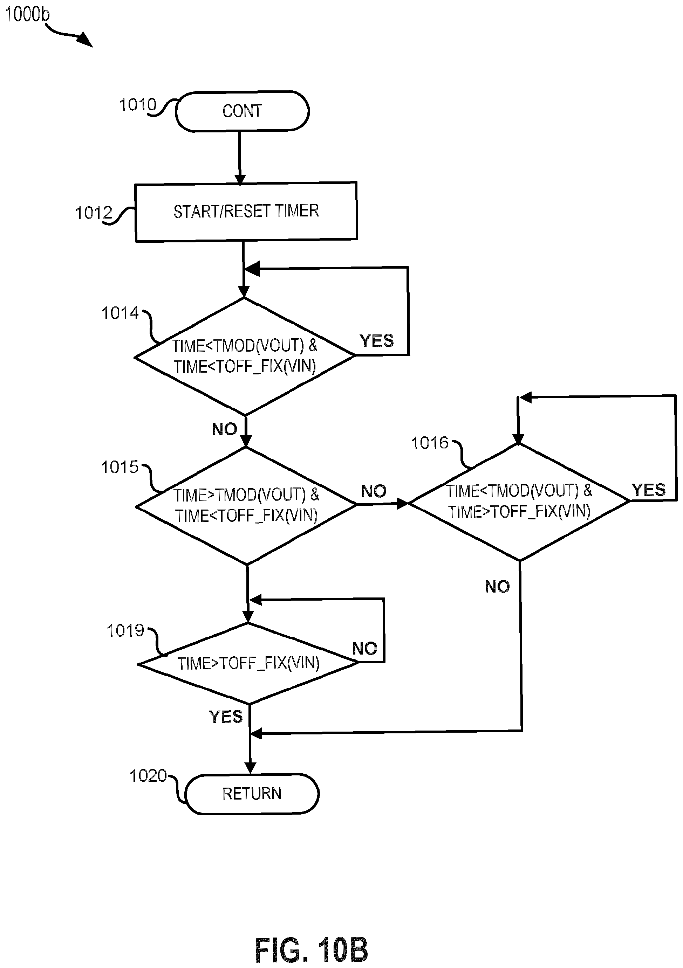

**FIG. 10B** illustrates a flowchart 1000b for determining the oscillator turn off time TOFF_OSC according to the teachings herein. Flowchart 1000b also follows from control relationships (i.e., equations EQ. 4, and EQ 7), and may also apply to systems (e.g., software, digital, and the like) without necessitating an oscillator. Step 1010 continues from flowchart 1000a. Step 1012 corresponds to resetting counter TIME.

Decision step 1014 may correspond with comparing a modulation width TMOD(Ic) with a fixed off time TOFF_FIX. Modulation width TMOD may be a function of output voltage VOUT. Fixed off time TOFF_FIX may be a function of input voltage VIN. Time variables such as the modulation width TMOD(VOUT) and fixed off time as a function of input voltage TOFF_FIX(VIN) may be determined using digital approaches and/or lookup tables. While the counter TIME is less than the modulation width TMOD and the fixed off time TOFF_FIX, remain at decision step 1014. Otherwise continue to decision step 1015.

Decision step 1015 may also correspond with comparing a modulation width TMOD(Ic) with a fixed off time TOFF_FIX. If the counter TIME is greater than (or equal to) the modulation width TMOD and less than the fixed off time TOFF_FIX then proceed to step 1019.

At decision step 1019, while the counter TIME is less than (or equal to) the fixed off time TOFF_OSC, remain at step 1019. Otherwise proceed to step 1020 with counter TIME determined by the fixed off time TOFF_FIX(VIN).

Decision step 1016 may correspond with the modulation width TMOD exceeding the fixed off time TOFF_FIX. While the counter TIME is less than the modulation width TMOD and greater than (or equal to) the fixed off time TOFF_FIX remain at decision step 1016. Otherwise proceed to step 1020 with counter TIME determined by the modulation width TMOD.

Return step 1020 may correspond with ending a switching cycle (e.g., a drive period TDR and/or oscillator period TOSC).

As noted above in the discussion of flowcharts 1000a-b, oscillator turn on time TON_OSC and turn off time TOFF_OSC may be implemented using a digital approach without necessitating an oscillator signal OSC nor a devoted oscillator 120. Instead, oscillator turn on time TON_OSC and turn off time TOFF_OSC may be controlled/calculated values (i.e., a controlled turn on time TON_OSC and a controlled turn off time TOFF_OSC) implemented using a digital approach (e.g., using a microcontroller, DSP, and/or A/D converters). The controlled turn on time TON_OSC and controlled turn off time TOFF_OSC may then determine the drive period TDR.

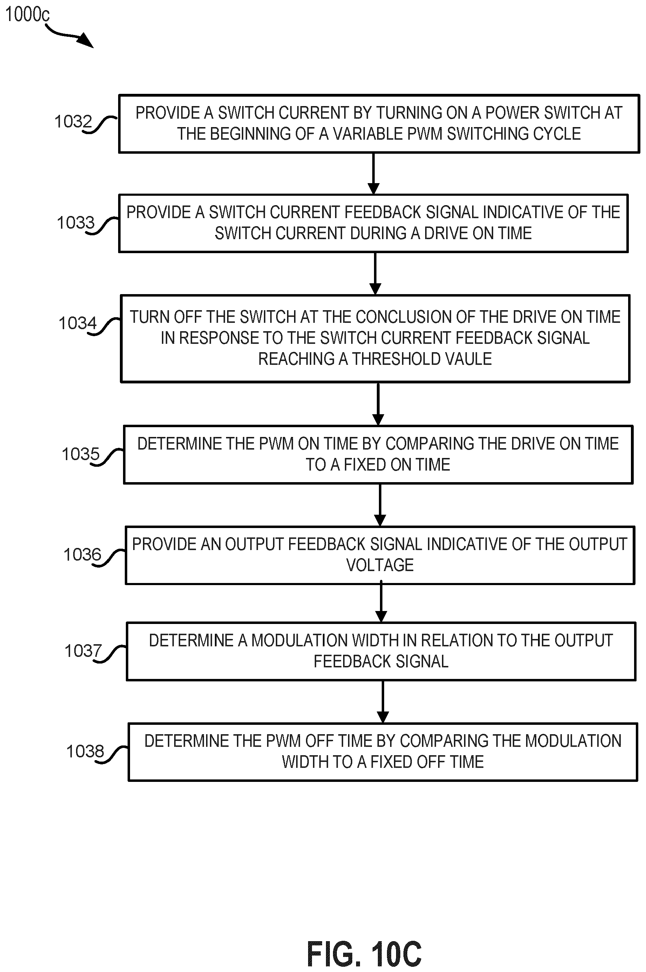

**FIG. 10C** illustrates a conceptual flow diagram 1000c according to the teachings herein. With reference to FIG 2A, step 1032 may correspond with providing switch current $I_{SW}$ at the beginning of a variable switching cycle. Step 1033 may correspond with providing a switch current feedback signal (e.g., sense voltage VSENS) indicative of the switch current $I_{SW}$ during a drive on time TON_DR. For instance, sense voltage VSENS may be provided to comparator 218.

Step 1034 may correspond with turning off the switch (e.g., primary switch S1) at the conclusion of the drive on time TON_DR. For instance, comparator 218 may, in response to sense voltage VSENS reaching a threshold value (e.g., a threshold value of reference UCR), turn off primary switch S1. Accordingly, step 1034 may also correspond with the determination of the drive on time TON_DR during the variable switching cycle.

Step 1035 may correspond with determining the controlled on time TON_OSC (e.g., oscillator on time TON_OSC) according to control equation EQ. 2. According to control equation EQ. 2, controlled on time TON_OSC may be determined by comparing drive on time TON_DR, as determined during step 1034, with a fixed on time TON_FIX (e.g., four point four microseconds).

Step 1036 may correspond with providing an output feedback signal (e.g., control current Ic) indicative of the output voltage VOUT. Step 1037 may correspond with determining a modulation width TMOD in relation to the output feedback signal (e.g., control current Ic).

Step 1038 may correspond with determining the controlled off time TOFF_OSC (e.g., oscillator on time TOFF_OSC) according to control equation EQ. 4 and/or control equation EQ. 7. According to control equations EQ. 4 and EQ.7, controlled off time TOFF_OSC may be determined by comparing the modulation width TMOD, as determined in step 1037, with a fixed off time TOFF_FIX.

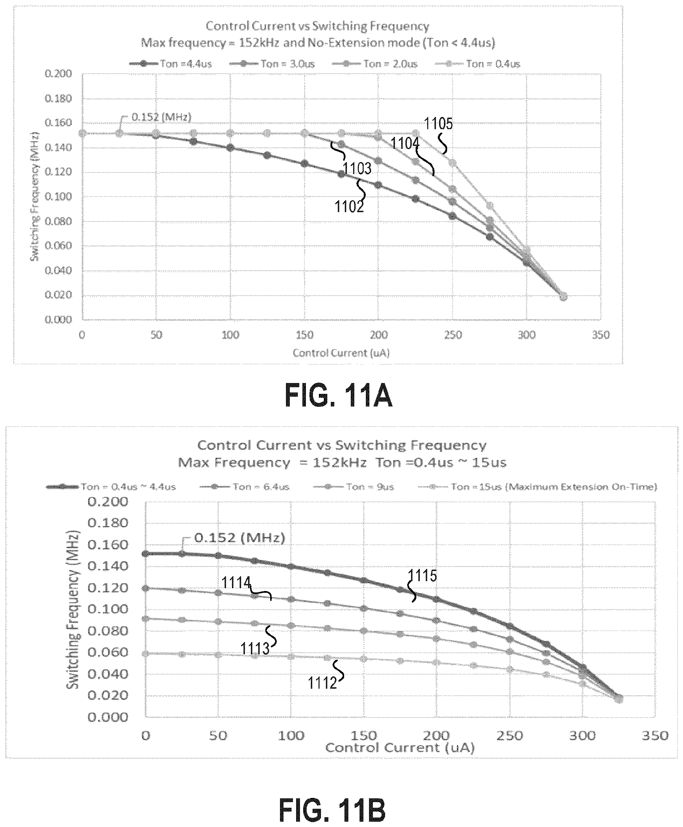

**FIG. 11A** illustrates plots 1102-1105 of frequency versus control current according to a controller with large variations in gain G. Plots 1102-1105 correspond with drive switching cycles having a drive on time TON_DR of zero point four microseconds (0.4us), two microseconds (2.0us), three microseconds (3.0us), and four point four microseconds (4.4us), respectively.

Plot 1105 may correspond with reduced control range. For instance, the range of control is limited to values of control current Ic from two hundred twenty five microamperes (225uA) to three hundred fifty microamperes (350uA).

Variation in the gain G, determined by the slope, (i.e., the derivative of frequency f with respect to control current Ic), may be too large for stable control over the range of drive on time TON_DR and over the range of control current Ic.

FIG. 11B illustrates plots 1112-1115 of frequency versus control current according to the teachings herein. Plots 1112-1115 may correspond with flyback control models 200, 201 of FIGs. 2A-2E according to equations EQ. 2, EQ. 4, and EQ. 7.

Plot 1115 exhibits a controllable gain G (i.e., derivative of frequency f with respect to control current Ic), from zero to 350uA control current Ic and with drive on time TON_DR ranging from 0.4us to 4.4us. By comparison to FIG. 11A, plot 1115 shows a superior frequency f to control current Ic relationship.

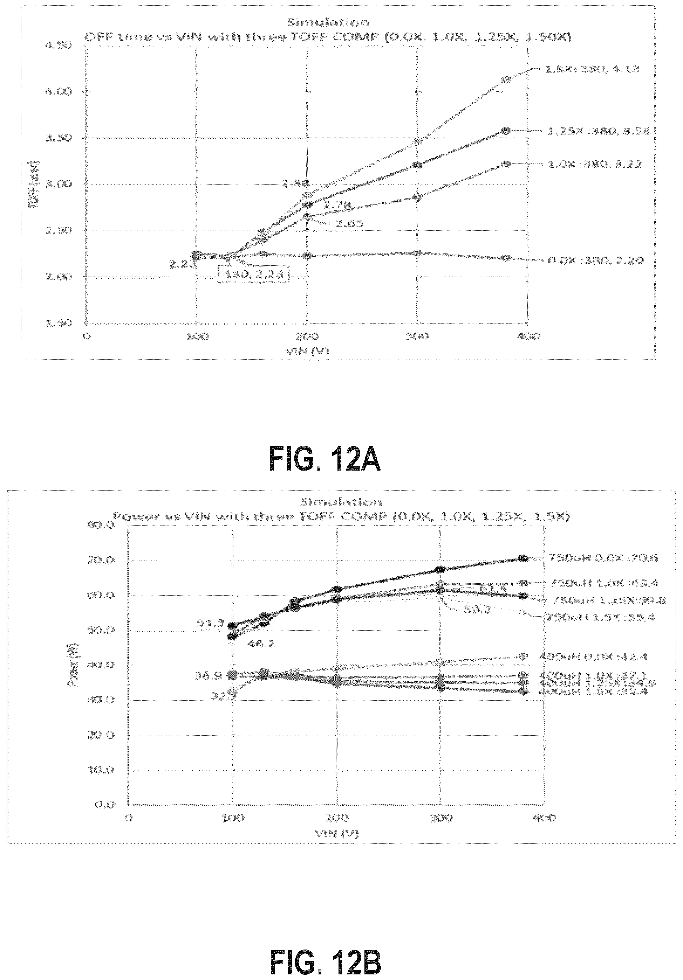

FIG. 12A illustrates plots of oscillator off time TOFF_OSC versus input voltage VIN showing different choices for scaling factors for compensating minimum off time in response to input voltage (TOFF COMP).

FIG. 12B compares plots of output power POUT versus input voltage VIN illustrating example performance based on choice of TOFF COMP.

The above description of illustrated examples of the present disclosure, including what is described in the Abstract, is not intended to be exhaustive or to be limitation to the precise forms disclosed. While specific embodiments of, and examples for a power supply converter for enhancing control loop stability are described herein for illustrative purposes, various equivalent modifications are possible without departing from the broader spirit and scope of the present disclosure. Indeed, it is appreciated that the specific example voltages, currents, frequencies, power range values, times, etc., are provided for explanation purposes and that other values may also be employed in other embodiments and examples in accordance with the teachings herein.

The foregoing description may refer to elements or features as being "connected" or "coupled" together. As used herein, unless expressly stated otherwise, "connected" or "electrically connected" means that one element/feature is directly or indirectly connected to another element/feature, and not necessarily mechanically. Likewise, unless expressly stated otherwise, "coupled" or "electrically coupled" means that one element/feature is directly or indirectly coupled to another element/feature, and not necessarily mechanically. Thus, although the various schematics shown in the figures depict example arrangements of elements and components, additional intervening elements, devices, features, or components may be present in an actual embodiment (assuming that the functionality of the depicted circuits is not adversely affected). Additionally, components may be excluded for the sake of providing an unencumbered illustration of the teachings herein.

In the context of the present application, when a transistor is in an "off-state" or "off" the transistor blocks current and/or does not substantially conduct current. Conversely, when a transistor is in an "on-state" or "on" the transistor is able to substantially conduct current. By way of example, in one embodiment, a high-voltage transistor comprises an N-channel metal-oxide-semiconductor (NMOS) field-effect transistor (FET) with the high-voltage being supported between the first terminal, a drain, and the second terminal, a source. Also, for purposes of this disclosure, "ground" or "ground potential" refers to a reference voltage or potential against which all other voltages or potentials of an electronic circuit or integrated circuit (IC) are defined or measured.

Moreover, conditional language used herein, such as, among others, "can," "could," "might," "may," "e.g.," "for example," "such as" and the like, unless specifically stated otherwise or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding whether these features, elements and/or states are included or are to be performed in any particular embodiment.

While certain embodiments have been described, these embodiments have been presented by way of example only, and are not intended to limit the scope of the disclosure. Indeed, the novel apparatus, methods, and systems described herein may be embodied in a variety of other forms; furthermore, various omissions, substitutions, and changes in the form of the methods and systems described herein may be made without departing from the spirit of the disclosure. For example, while the disclosed embodiments are presented in a given arrangement, alternative embodiments may perform similar functionalities with different components and/or circuit topologies, and some elements may be deleted, moved, added, subdivided, combined, and/or modified. Each of these elements may be implemented in a variety of different ways. Any suitable combination of the elements and acts of the various embodiments described above can be combined to provide further embodiments. Accordingly, the scope of the present invention is defined only by reference to the appended claims.

Although the claims presented here are in single dependency format for filing at the USPTO, it is to be understood that any claim may depend on any preceding claim of the same type except when that is clearly not technically feasible.

EMBODIMENTS

Although the present invention is defined in the attached claims, it should be understood that the present invention can also (alternatively) be defined in accordance with the following two sets of embodiments:

Set 1

1. A switch mode power converter configured to convert input power into output power and to regulate an output voltage, the switch mode power converter comprising:

   feedback circuitry configured to provide a feedback signal indicative of the output voltage;
   an off-time modulator configured to generate a modulator signal having a modulation width determined, at least in part, by a magnitude of the feedback signal;
   an oscillator configured to provide an oscillator signal according to an oscillator switching cycle comprising an oscillator on time and an oscillator off time, wherein the oscillator on time is greater than or equal to a fixed on time and the oscillator off time is determined, at least in part, by the modulation width; and
   a switch configured to provide a switch current according to a drive signal switching cycle, wherein the switch conducts the switch current during a drive on time, and wherein the drive signal switching cycle is determined by the oscillator switching cycle.

2. The switch mode power converter of embodiment 1, wherein the switch mode power converter is a flyback power converter.
3. The switch mode power converter of embodiment 1, wherein the oscillator on time is limited to the fixed on time when the drive on time is less than the fixed on time.
4. The switch mode power converter of embodiment 3, wherein the fixed on time is between three microseconds (3 us) and five microseconds (5 us).
5. The switch mode power converter of embodiment 3, wherein the oscillator on time is commensurate with the drive on time when the drive on time is greater than the fixed on time.
6. The switch mode power converter of embodiment 1, wherein the oscillator off time is limited to a fixed off time when the modulation width is less than the fixed off time.
7. The switch mode power converter of embodiment 6, wherein the fixed off time is between one microsecond (1 us) and three microseconds (3 us).
8. The switch mode power converter of embodiment 6, wherein the oscillator off time is commensurate with the modulation width when the modulation width is greater than the fixed off time.
9. The switch mode power converter of embodiment 1, wherein the oscillator is configured to generate a triangle wave having a rising segment and a falling segment.
10. The switch mode power converter of embodiment 9, wherein the oscillator on time is determined, at least in part, by a duration of the rising segment.
11. The switch mode power converter of embodiment 10, wherein the duration of the rising segment is between three microseconds (3 us) and five microseconds (5 us).
12. The switch mode power converter of embodiment 10, wherein a transition time to the falling segment is delayed when the drive on time is greater than the duration of the rising segment.
13. The switch mode power converter of embodiment 12, wherein the oscillator on time is determined by the duration of the rising segment and a duration of the transition time to the falling segment.

14. The switch mode power converter of embodiment 9, wherein the oscillator off time is determined, at least in part, by a duration of the falling segment.
15. The switch mode power converter of embodiment 14, wherein the duration of the falling segment is between one microsecond (1 us) and three microseconds (3 us).
16. The switch mode power converter of embodiment 14, wherein a transition to a subsequent cycle rising segment is delayed when the modulation width is greater than the duration of the falling segment.
17. The switch mode power converter of embodiment 16, wherein the oscillator off time is determined, at least in part, by the duration of the falling segment and a duration of the transition to the subsequent cycle rising segment.
18. The switch mode power converter of embodiment 17, wherein the off-time modulator is configured to generate a sawtooth wave during the falling segment.
19. The switch mode power converter of embodiment 18, wherein the modulation width is determined by a comparison of the sawtooth wave to a modulation reference.
20. The switch mode power converter of embodiment 17, wherein the output power is based, at least in part, upon a load current and wherein the input power is based, at least in part, upon an input voltage.
21. The switch mode power converter of embodiment 20, wherein the duration of the falling segment is increased in response to an increase in the input voltage.
22. The switch mode power converter of embodiment 20, wherein the oscillator off time is varied to reduce a variation in the drive signal switching cycle as a function of the load current.
23. The switch mode power converter of embodiment 22, wherein the feedback signal is a control current, and wherein the oscillator off time is varied to reduce a variation in the drive signal switching cycle as a function of the control current.
24. The switch mode power converter of embodiment 23, wherein the duration of the falling segment is increased to reduce a variation in the output power as a function of the input voltage.
25. A method of regulating an output voltage according to a variable switching cycle having a controlled on time and a controlled off time, the method comprising:

providing a switch current by turning on a switch at a beginning of the variable switching cycle;
providing a switch current feedback signal indicative of the switch current during a drive on time;
turning off the switch at a conclusion of the drive on time in response to the switch current feedback signal reaching a threshold value;
determining the controlled on time by comparing the drive on time to a fixed on time;
providing an output feedback signal indicative of the output voltage;
determining a modulation width in relation to the output feedback signal; and
determining the controlled off time by comparing the modulation width to a fixed off time.

26. The method of embodiment 25 further comprising:

generating the variable switching cycle using a current controlled triangle wave generator.

27. The method of embodiment 26, wherein generating the variable switching cycle using the current controlled triangle wave generator comprises:
charging a capacitor with a current comprising a difference of a fixed current and a current proportional to the output feedback signal.
28. The method of embodiment 25 further comprising:

providing a feedforward signal indicative of an input supply voltage; and
varying the fixed off time in relation to the feedforward signal.

29. The method of embodiment 25, wherein the switch current feedback signal is a voltage.
30. The method of embodiment 25, wherein the threshold value is constant.
31. The method of embodiment 25, wherein turning off the switch at the conclusion of the drive on time in response to the switch current feedback signal reaching the threshold value comprises:
providing a slope compensation to the threshold value.
32. The method of embodiment 25, wherein turning off the switch at the conclusion of the drive on time in response to the switch current feedback signal reaching the threshold value comprises:
varying the threshold value to modulate a ramp time of the switch current.
33. The method of embodiment 25, wherein determining the controlled on time by comparing the drive on time to the fixed on time comprises:

limiting the controlled on time to the fixed on time when the fixed on time is greater than the drive on time.

34. The method of embodiment 25, wherein determining the controlled on time by comparing the drive on time to the fixed on time comprises:

limiting the controlled on time to the drive on time when the fixed on time is less than the drive on time.

35. The method of embodiment 25, wherein providing the output feedback signal indicative of the output voltage comprises:

providing a photodiode current using an optocoupler.

36. The method of embodiment 25, wherein determining the controlled off time by comparing the modulation width to the fixed off time comprises:

limiting the controlled off time to the modulation width when the modulation width is greater than the fixed off time.

37. The method of embodiment 25, wherein determining the controlled off time by comparing the modulation width to the fixed off time comprises:

limiting the controlled off time to the fixed off time when the modulation width is less than the fixed off time.

Set 2

1. A switch mode power converter configured to convert input power into output power and to regulate an output voltage, the switch mode power converter comprising:

feedback circuitry configured to provide a feedback signal indicative of the output voltage;

an off time modulator configured to generate a modulator signal having a modulation width determined, at least in part, by a magnitude of the feedback signal;

an oscillator configured to provide an oscillator signal according to an oscillator switching cycle comprising an oscillator on time and an oscillator off time, wherein the oscillator on time is greater than or equal to a fixed on time and the oscillator off time is determined, at least in part, by the modulation width; and

a switch configured to provide a switch current according to a drive signal switching cycle, wherein the switch conducts the switch current during a drive on time, and wherein the drive signal switching cycle is determined by the oscillator switching cycle.

2. The switch mode power converter of embodiment 1, wherein the switch mode power converter is a flyback power converter.

3. The switch mode power converter of embodiment 1, wherein the oscillator on time is limited to the fixed on time when the drive on time is less than the fixed on time.

4. The switch mode power converter of embodiment 3, wherein the fixed on time is between three microseconds (3 us) and five microseconds (5 us).

5. The switch mode power converter of embodiment 3, wherein the oscillator on time is commensurate with the drive on time when the drive on time is greater than the fixed on time.

6. The switch mode power converter of embodiment 1, wherein the oscillator off time is limited to a fixed off time when the modulation width is less than the fixed off time.

7. The switch mode power converter of embodiment 6, wherein the fixed off time is between one microsecond (1 us) and three microseconds (3 us).

8. The switch mode power converter of embodiment 6, wherein the oscillator off time is commensurate with the modulation width when the modulation width is greater than the fixed off time.

9. The switch mode power converter of embodiment 1, wherein the oscillator is configured to generate a triangle wave having a rising segment and a falling segment.

10. The switch mode power converter of embodiment 9, wherein the oscillator on time is determined, at least in part, by a duration of the rising segment.

11. The switch mode power converter of embodiment 10, wherein the duration of the rising segment is between three microseconds (3 us) and five microseconds (5 us).

12. The switch mode power converter of embodiment 10, wherein a transition time to the falling segment is delayed when the drive on time is greater than the duration of the rising segment.

13. The switch mode power converter of embodiment 12, wherein the oscillator on time is determined by the duration of the rising segment and a duration of the transition time to the falling segment.

14. The switch mode power converter of embodiment 9, wherein the oscillator off time is determined, at least in part, by a duration of the falling segment.

15. The switch mode power converter of embodiment 14, wherein the duration of the falling segment is between one microsecond (1 us) and three microseconds (3 us).

16. The switch mode power converter of embodiment 14, wherein a transition to a subsequent cycle rising segment is delayed when the modulation width is greater than the duration of the falling segment.

17. The switch mode power converter of embodiment 16, wherein the oscillator off time is determined, at least in part, by the duration of the falling segment and a duration of the transition to the subsequent cycle rising segment.

18. The switch mode power converter of embodiment 17, wherein the off time modulator is configured to generate a sawtooth wave during the falling segment.

19. The switch mode power converter of embodiment 18, wherein the modulation width is determined by a comparison of the sawtooth wave to a modulation threshold.

20. The switch mode power converter of embodiment 17, wherein the output power is based, at least in part, upon a load current and wherein the input power is based, at least in part, upon an input voltage.

21. The switch mode power converter of embodiment 20, wherein the duration of the falling segment is increased in response to an increase in the input voltage.

22. The switch mode power converter of embodiment 20, wherein the oscillator off time is varied to reduce a variation in the drive signal switching cycle as a function of the load current.

23. The switch mode power converter of embodiment 22, wherein the feedback signal is a control current, and wherein the oscillator off time is varied to reduce a variation in the drive signal switching cycle as a function of the control current.

24. The switch mode power converter of embodiment 23, wherein the duration of the falling segment is increased to reduce a variation in the output power as a function of the input voltage.

25. A switch mode power converter configured to receive an input voltage and to provide an output voltage to a load, the switch mode power converter comprising:

a switch configured to provide a switch current according to a drive signal switching cycle comprising a drive on time;
a current control loop configured to control the drive on time in response to the switch current;
a voltage control loop configured to control the drive off time in response to a feedback signal indicative of the output voltage and comprising:

an off time modulator configured to generate a modulator signal having a modulation width based, at least in part, upon a magnitude of the feedback signal; and
an oscillator configured to provide an oscillator signal according to an oscillator switching cycle comprising an oscillator on time greater than or equal to a fixed on time and an oscillator off time determined, at least in part, by the modulation width, wherein the drive signal switching cycle is determined by the oscillator switching cycle.

26. The switch mode power converter of embodiment 25, wherein the switch current provides energy to an energy transfer element such that switch current increases during the drive on time.

27. The switch mode power converter of embodiment 26, wherein the current control loop is configured to control the drive on time in response to a peak value of the switch current exceeding a threshold value.

28. The switch mode power converter of embodiment 27, wherein the current control loop comprises a comparator configured to compare the switch current to the threshold value.

29. The switch mode power converter of embodiment 27, wherein the threshold value is a constant.

30. The switch mode power converter of embodiment 27, wherein the threshold value varies as a function of time.

31. The switch mode power converter of embodiment 27, wherein the threshold value is based, at least in part, upon an output load current.

32. The switch mode power converter of embodiment 25, further comprising a feedforward path configured to provide a feedforward signal to the oscillator, the feedforward signal indicative of the input voltage.

33. The switch mode power converter of embodiment 32, wherein the feedforward path is configured to provide a feedforward signal to the oscillator to reduce a variation in an output load current.

34. The switch mode power converter of embodiment 33, wherein the oscillator off time increases as a function of the input voltage.

35. The switch mode power converter of embodiment 34, wherein the oscillator is configured to increase the oscillator off time to reduce a variation in an output power to the load.

36. A method of regulating an output voltage according to a variable pulse width modulation (PWM) switching cycle having a PWM on time and a PWM off time, the method comprising:

providing a switch current by turning on a switch at a beginning of the variable PWM switching cycle;

providing a switch current feedback signal indicative of the switch current during a drive on time;
turning off the switch at a conclusion of the drive on time in response to the switch current feedback signal reaching a threshold value;
determining the PWM on time by comparing the drive on time to a fixed on time;
providing an output feedback signal indicative of the output voltage;
determining a modulation width in relation to the output feedback signal; and
determining the PWM off time by comparing the modulation width to a fixed off time.

37. The method of embodiment 36 further comprising:
generating the variable PWM switching cycle using a current controlled triangle wave generator.
38. The method of embodiment 37, wherein generating the variable PWM switching cycle using the current controlled triangle wave generator comprises:
charging a capacitor with a current comprising a difference of a fixed current and a current proportional to the output feedback signal.
39. The method of embodiment 36 further comprising:

providing a feedforward signal indicative of an input supply voltage; and
varying the fixed off time in relation to the feedforward signal.

40. The method of embodiment 36, wherein the switch current feedback signal is a voltage.
41. The method of embodiment 36, wherein the threshold value is constant.
42. The method of embodiment 36, wherein the threshold value is variable.
43. The method of embodiment 42, wherein the threshold value varies with time.
44. The method of embodiment 36, wherein turning off the switch at the conclusion of the drive on time in response to the switch current feedback signal reaching the threshold value comprises:
providing a slope compensation to the threshold value.
45. The method of embodiment 36, wherein turning off the switch at the conclusion of the drive on time in response to the switch current feedback signal reaching the threshold value comprises:
varying the threshold value to modulate a ramp time of the switch current.
46. The method of embodiment 36, wherein determining the PWM on time by comparing the drive on time to the fixed on time comprises:
limiting the PWM on time to the fixed on time when the fixed on time is greater than the drive on time.
47. The method of embodiment 36, wherein determining the PWM on time by comparing the drive on time to the fixed on time comprises:
limiting the PWM on time to the drive on time when the fixed on time is less than the drive on time.
48. The method of embodiment 36, wherein providing the output feedback signal indicative of the output voltage comprises:
providing a photodiode current using an optocoupler.
49. The method of embodiment 36, wherein determining the PWM off time by comparing the modulation width to the fixed off time comprises:
limiting the PWM off time to the modulation width when the modulation width is greater than the fixed off time.
50. The method of embodiment 36, wherein determining the PWM off time by comparing the modulation width to the fixed off time comprises:
limiting the PWM off time to the fixed off time when the modulation width is less than the fixed off time.
51. A switch mode power converter configured to convert input power into output power and to regulate a load current, the switch mode power converter comprising:

feedback circuitry configured to provide a feedback signal indicative of the load current;
an off time modulator configured to generate a modulator signal having a modulation width determined, at least in part, by a magnitude of the feedback signal;
an oscillator configured to provide an oscillator signal according to an oscillator switching cycle comprising an oscillator on time and an oscillator off time, wherein the oscillator on time is greater than or equal to a fixed on time and the oscillator off time is determined, at least in part, by the modulation width; and
a switch configured to provide a switch current according to a drive signal switching cycle, wherein the switch conducts the switch current during a drive on time, and wherein the drive signal switching cycle is determined by the oscillator switching cycle.

52. The switch mode power converter of embodiment 51, wherein the switch mode power converter is a flyback power converter.

53. The switch mode power converter of embodiment 51, wherein the oscillator on time is substantially equal to the fixed on time when the drive on time is less than the fixed on time.

54. The switch mode power converter of embodiment 53, wherein the fixed on time is between three microseconds (3 us) and five microseconds (5 us).

55. The switch mode power converter of embodiment 53, wherein the oscillator on time is commensurate with the drive on time when the drive on time is greater than the fixed on time.

56. The switch mode power converter of embodiment 51, wherein the oscillator off time is limited to a fixed off time when the modulation width is less than the fixed off time.

57. The switch mode power converter of embodiment 56, wherein the fixed off time is between one microsecond (1 us) and three microseconds (3 us).

58. The switch mode power converter of embodiment 56, wherein the oscillator off time is commensurate with the modulation width when the modulation width is greater than the fixed off time.

59. The switch mode power converter of embodiment 51, wherein the oscillator is configured to generate a triangle wave having a rising segment and a falling segment.

60. The switch mode power converter of embodiment 59, wherein the oscillator on time is determined, at least in part, by a duration of the rising segment.

61. The switch mode power converter of embodiment 60, wherein the duration of the rising segment is between three microseconds (3 us) and five microseconds (5 us).

62. The switch mode power converter of embodiment 60, wherein a transition time to the falling segment is delayed when the drive on time is greater than the duration of the rising segment.

63. The switch mode power converter of embodiment 62, wherein the oscillator on time is determined by the duration of the rising segment and a duration of the transition time to the falling segment.

64. The switch mode power converter of embodiment 59, wherein the oscillator off time is determined, at least in part, by a duration of the falling segment.

65. The switch mode power converter of embodiment 64, wherein the duration of the falling segment is between one microsecond (1 us) and three microseconds (3 us).

66. The switch mode power converter of embodiment 64, wherein a transition to a subsequent cycle rising segment is delayed when the modulation width is greater than the duration of the falling segment.

67. The switch mode power converter of embodiment 66, wherein the oscillator off time is determined, at least in part, by the duration of the falling segment and a duration of the transition to the subsequent cycle rising segment.

68. The switch mode power converter of embodiment 67, wherein the off time modulator is configured to generate a sawtooth wave during the falling segment.

69. The switch mode power converter of embodiment 68, wherein the modulation width is determined by a comparison of the sawtooth wave to a modulation threshold.

70. The switch mode power converter of embodiment 67, wherein the output power is based, at least in part, upon the load current and wherein the input power is based, at least in part, upon an input voltage.

71. The switch mode power converter of embodiment 70, wherein the duration of the falling segment is increased in response to an increase in the input voltage.

72. The switch mode power converter of embodiment 70, wherein the oscillator off time is varied to reduce a variation in the drive signal switching cycle.

73. The switch mode power converter of embodiment 72, wherein the feedback signal is a control current, and wherein the oscillator off time is varied as a function of the control current.

74. The switch mode power converter of embodiment 73, wherein the duration of the falling segment is increased to reduce a variation in the output power as a function of the input voltage.

75. A method of regulating a load current according to a variable pulse width modulation (PWM) switching cycle having a PWM on time and a PWM off time, the method comprising:

providing a switch current by turning on a switch at a beginning of the variable PWM switching cycle;
providing a switch current feedback signal indicative of the switch current during a drive on time;
turning off the switch at a conclusion of the drive on time in response to the switch current feedback signal reaching a threshold value;
determining the PWM on time by comparing the drive on time to a fixed on time;
providing an output feedback signal indicative of the load current;
determining a modulation width in relation to the output feedback signal; and
determining the PWM off time by comparing the modulation width to a fixed off time.

76. The method of embodiment 75 further comprising:

generating the variable PWM switching cycle using a current controlled triangle wave generator.

77. The method of embodiment 76, wherein generating the variable PWM switching cycle using the current controlled triangle wave generator comprises:

charging a capacitor with a current comprising a difference of a fixed current and a current proportional to the output feedback signal.

78. The method of embodiment 75 further comprising:

providing a feedforward signal indicative of an input supply voltage; and
varying the fixed off time in relation to the feedforward signal.

79. The method of embodiment 75, wherein the switch current feedback signal is a voltage.

80. The method of embodiment 75, wherein the threshold value is constant.

81. The method of embodiment 75, wherein the threshold value is variable.

82. The method of embodiment 75, wherein the threshold value varies with time.

83. The method of embodiment 75, wherein turning off the switch at the conclusion of the drive on time in response to the switch current feedback signal reaching the threshold value comprises:

providing a slope compensation to the threshold value.

84. The method of embodiment 75, wherein turning off the switch at the conclusion of the drive on time in response to the switch current feedback signal reaching the threshold value comprises:

varying the threshold value to modulate a ramp time of the switch current.

85. The method of embodiment 75, wherein determining the PWM on time by comparing the drive on time to the fixed on time comprises:

matching the PWM on time to the fixed on time when the fixed on time is greater than the drive on time.

86. The method of embodiment 75, wherein determining the PWM on time by comparing the drive on time to the fixed on time comprises:

matching the PWM on time to the drive on time when the fixed on time is less than the drive on time.

87. The method of embodiment 75, wherein providing the output feedback signal indicative of the load current comprises:

providing a photodiode current using an optocoupler.

88. The method of embodiment 75, wherein determining the PWM off time by comparing the modulation width to the fixed off time comprises:

matching the PWM off time to the modulation width when the modulation width is greater than the fixed off time.

89. The method of embodiment 75, wherein determining the PWM off time by comparing the modulation width to the fixed off time comprises:

matching the PWM off time to the fixed off time when the modulation width is less than the fixed off time.

## Claims

**1.** A switch mode power converter configured to convert input power into output power and to regulate an output voltage, the switch mode power converter comprising:

feedback circuitry configured to provide a feedback signal indicative of the output voltage;
an off-time modulator configured to generate a modulator signal having a modulation width determined, at least in part, by a magnitude of the feedback signal;
an oscillator configured to provide an oscillator signal according to an oscillator switching cycle comprising an oscillator on time and an oscillator off time, wherein the oscillator on time is greater than or equal to a fixed on time and the oscillator off time is determined, at least in part, by the modulation width; and
a switch configured to provide a switch current according to a drive signal switching cycle, wherein the switch conducts the switch current during a drive on time, and wherein the drive signal switching cycle is determined by the oscillator switching cycle.

**2.** The switch mode power converter of claim 1, wherein the switch mode power converter is a flyback power converter.

**3.** The switch mode power converter of any preceding claim, wherein the oscillator on time is limited to the fixed on time when the drive on time is less than the fixed on time, and optionally wherein the fixed on time is between three microseconds (3 us) and five microseconds (5 us).

4. The switch mode power converter of claim 3, wherein the oscillator on time is commensurate with the drive on time when the drive on time is greater than the fixed on time.

5. The switch mode power converter of any preceding claim, wherein the oscillator off time is limited to a fixed off time when the modulation width is less than the fixed off time, for example, wherein the fixed off time is between one microsecond (1 us) and three microseconds (3 us), and
optionally wherein the oscillator off time is commensurate with the modulation width when the modulation width is greater than the fixed off time.

6. The switch mode power converter of any preceding claim, wherein the oscillator is configured to generate a triangle wave having a rising segment and a falling segment.

7. The switch mode power converter of claim 6, wherein the oscillator on time is determined, at least in part, by either:

--a duration of the rising segment, for example, wherein the duration of the rising segment is between three microseconds (3 us) and five microseconds (5 us); or
-- a duration of the falling segment, for example, wherein the duration of the falling segment is between one microsecond (1 us) and three microseconds (3 us)..

8. The switch mode power converter of claim 6, wherein:

the oscillator on time is determined, at least in part, by a duration of the rising segment; and
a transition time to the falling segment is delayed when the drive on time is greater than the duration of the rising segment, and
optionally wherein the oscillator on time is determined by the duration of the rising segment and a duration of the transition time to the falling segment.

9. The switch mode power converter of claim 6, wherein:

the oscillator off time is determined, at least in part, by a duration of the falling segment; and
a transition to a subsequent cycle rising segment is delayed when the modulation width is greater than the duration of the falling segment.

10. The switch mode power converter of claim 9, wherein the oscillator off time is determined, at least in part, by the duration of the falling segment and a duration of the transition to the subsequent cycle rising segment.

11. The switch mode power converter of claim 10, wherein the off-time modulator is configured to generate a sawtooth wave during the falling segment, and
optionally wherein the modulation width is determined by a comparison of the sawtooth wave to a modulation reference.

12. The switch mode power converter of claim 10, wherein the output power is based, at least in part, upon a load current and wherein the input power is based, at least in part, upon an input voltage, and
optionally wherein the duration of the falling segment is increased in response to an increase in the input voltage.

13. The switch mode power converter of claim 12, wherein the oscillator off time is varied to reduce a variation in the drive signal switching cycle as a function of the load current.

14. The switch mode power converter of claim 13, wherein the feedback signal is a control current, and wherein the oscillator off time is varied to reduce a variation in the drive signal switching cycle as a function of the control current, and
optionally wherein the duration of the falling segment is increased to reduce a variation in the output power as a function of the input voltage.

15. A method of regulating an output voltage according to a variable switching cycle having a controlled on time and a controlled off time, the method comprising:

providing a switch current by turning on a switch at a beginning of the variable switching cycle;

providing a switch current feedback signal indicative of the switch current during a drive on time;
turning off the switch at a conclusion of the drive on time in response to the switch current feedback signal reaching a threshold value;
determining the controlled on time by comparing the drive on time to a fixed on time;
providing an output feedback signal indicative of the output voltage;
determining a modulation width in relation to the output feedback signal; and
determining the controlled off time by comparing the modulation width to a fixed off time.

**16.** The method of claim 15 further comprising:

generating the variable switching cycle using a current controlled triangle wave generator, and
optionally wherein generating the variable switching cycle using the current controlled triangle wave generator comprises charging a capacitor with a current comprising a difference of a fixed current and a current proportional to the output feedback signal.

**17.** The method of any one of claims 15 to 16 further comprising:

providing a feedforward signal indicative of an input supply voltage; and
varying the fixed off time in relation to the feedforward signal.

**18.** The method of any one of claims 15 to 17, wherein either:

the switch current feedback signal is a voltage; or
the threshold value is constant.

**19.** The method of any one of claims 15 to 18, wherein turning off the switch at the conclusion of the drive on time in response to the switch current feedback signal reaching the threshold value comprises either:
providing a slope compensation to the threshold value; or
varying the threshold value to modulate a ramp time of the switch current.

**20.** The method of any one of claims 15 to 19, wherein determining the controlled on time by comparing the drive on time to the fixed on time comprises either:

limiting the controlled on time to the fixed on time when the fixed on time is greater than the drive on time; or
limiting the controlled on time to the drive on time when the fixed on time is less than the drive on time.

**21.** The method of any one of claims 15 to 20, wherein determining the controlled off time by comparing the modulation width to the fixed off time comprises either:

limiting the controlled off time to the modulation width when the modulation width is greater than the fixed off time; or
limiting the controlled off time to the fixed off time when the modulation width is less than the fixed off time.

100
115
114
117
VIN
VOUT
102
103
RTN
$I_{SW}$
$I_V$
D
V
105
DR
108
C
$I_C$
S1
S
BP
CONTROLLER WITH
OFF-TIME MODULATOR
102
GND

FIG. 1A

$I_V$
V
BP
108
116
LINE INTERFACE
$I_{VS}$
120
OSCILLATOR
118
SWITCH CURRENT REF. GENERATOR
DR
UCR
OSC
$I_{SW}$
ISENS
188
CONTROL LOGIC
124
OSC
OFF_END
S1
DR
OFF-TIME MODULATOR
$I_C$
C
122
DR
CONTROLLER

FIG. 1B

200
Ic
212
114
IOUT
VIN
VOUT
232
210
RTN
TMOD
MOD
TON_OSC
TOFF_OSC
OSC
ITH
TON_DR
TOSC
TMOD
214
TON_DR
TOSC
216
ISW
TON_DR
TOFF_DR
288
OSC
DR
TDR
QDR
DR
S1
UCR
UCR
RST
VSENS
TON_DR
218
222
GND
$f = \frac{1}{TDR} = \frac{1}{TOSC}$
$G = \frac{df}{dIc}$
$TON_OSC = \begin{cases} TON_FIX & if \quad TON_FIX > TON_DR \\ TON_DR(I_{SW}) & if \quad TON_FIX \leq TON_DR \end{cases}$
$TOFF_OSC = \begin{cases} TOFF_FIX & if \quad TOFF_FIX > TMOD \\ TMOD(I_c) & if \quad TOFF_FIX \leq TMOD \end{cases}$


FIG. 2A

201
Ic
212
IOUT
VIN
VOUT
210
RTN
250
TMOD
MOD
TON_OSC
TOFF_OSC
IV
TOSC
ITH
TON_DR
Ic
TMOD
$f = \frac{1}{TDR} = \frac{1}{TOSC}$
$G = \frac{df}{dIc}$
TON_DR
TOSC
214
216
OSC
ISW
TON_DR
TOFF_DR
288
TDR
$TON_OSC = \begin{cases} TON_FIX & if \quad TON_FIX > TON_DR \\ TON_DR(I_{SW}) & if \quad TON_FIX \leq TON_DR \end{cases}$
S
Q
DR
S1
UCR
UCR
R
VSENS
TON_DR
218
222
GND
$TOFF_OSC = \begin{cases} TOFF_FIX(I_V) & if \quad TOFF_FIX > TMOD \\ TMOD(Ic) & if \quad TOFF_FIX \leq TMOD \end{cases}$

FIG. 2B

201
Ic
212
VIN
VOUT
210
RTN
250
TON_OSC
ITH
TON_DR
TMOD(Ic)
TON_DR
TOSC
214
216
TOSC
ISW
TON_DR(ISW)
288
222
TDR
DR
S1
S Q
R Q̄
UCR
218
VSENS
TON_DR
255
TON_DR(ISW)
f = 1/TDR = 1/TOSC
G = df/dIc
TON_OSC = { TON_FIX if TON_FIX > TON_DR ; TON_DR(ISW) if TON_FIX ≤ TON_DR }
TOFF_OSC = { TOFF_FIX(IV) if TOFF_FIX > TMOD ; TMOD(Ic) if TOFF_FIX ≤ TMOD }

FIG. 2C

201
Ic
212
VIN
VOUT
RTN
210
250
TOFF_OSC
TMOD(Ic)
260
ITH
TON_DR
$I_{SW}$
214
TON_DR
TOSC
216
TOSC
TOFF_DR
288
222
TDR
DR
S1
UCR
UCR
218
TON_DR
S
Q
R
$\bar{Q}$
$f = \frac{1}{TDR} = \frac{1}{TOSC}$
$G = \frac{df}{dIc}$
$TON_OSC = \begin{cases} TON_FIX & if \quad TON_FIX > TON_DR \\ TON_DR(I_{SW}) & if \quad TON_FIX \leq TON_DR \end{cases}$
$TOFF_OSC = \begin{cases} TOFF_FIX(I_V) & if \quad TOFF_FIX > TMOD \\ TMOD(Ic) & if \quad TOFF_FIX \leq TMOD \end{cases}$

FIG. 2D

201
Ic
212
VIN
VOUT
210
RTN
265
250
TOFF_FIX(Iv)
IV
TOFF_OSC
ITH
TON_DR
TMOD(Ic)
ISW
214
TON_DR
TOSC
TOSC
216
TOFF_DR
288
222
TDR
S
Q
DR
S1
UCR
UCR
218
R
Q
TON_DR
$f = \frac{1}{TDR} = \frac{1}{TOSC}$
$G = \frac{df}{dIc}$
$TON_OSC = \begin{cases} TON_FIX & if \quad TON_FIX > TON_DR \\ TON_DR(I_{SW}) & if \quad TON_FIX \leq TON_DR \end{cases}$
$TOFF_OSC = \begin{cases} TOFF_FIX(I_V) & if \quad TOFF_FIX > TMOD \\ TMOD(Ic) & if \quad TOFF_FIX \leq TMOD \end{cases}$

FIG. 2E

TOSC
TOSC
317
312
313
314
310
MOD
301
311
315
316
OSC
TON_OSC
302
TOFF_OSC
319
320
DR
TON_DR
TON_DR
303
TOFF_DR
TIME
321
318
TMOD
TMOD


FIG. 3A

MOD
OSC
DR
TIME
TOSC
TOSC
TMOD
TON_OSC
TOFF_OSC
TON_DR
TON_DR
TOFF_DR
331
332
333
334
335
336
337

FIG. 3B

TMOD
MOD
341
345
OSC
342
TOFF_OSC
TON_OSC
DR
TOFF_DR
343
TON_DR
TIME
344
346
347

FIG. 3C

TMOD
MOD
351
OSC
TON_OSC
TOFF_OSC
352
DR
TON_DR
TOFF_DR
353
TIME

FIG. 3D

120
440
$I_{ADJ}$
Q20
IR1
Q19
417
Q18
$I_{VS}$
Q17
416
Q16
420
$V_{CC}$
IT1
Q10
Q11
412
Q12
Q13
Q14
Q15
415
I16
N16
ITRI
G13
GND
NTRI
VTRI
C2
G10
G11
G12
430
WAVEFORM CIRCUITRY
OFF_END
OSC
TON_OSC
TOFF_OSC
TOSC
450
TON_OSC
TOFF_OSC
DR


FIG. 4

122
540
VCC
IREF
IC
IADJ
528
Q5
Q6
526
I2
Q1
Q2
527
Q3
Q4
GND
GND
IOTM
NOTM
C1
GND
VOTM
TH_OFF
530
+
-
SET
532
S
Q
R
DR
OFF_END
545
OFF_END
OSC
DR
G7
536
Q7
GND
550
TH_OFF
VOTM
MOD=G7
G7
OFF_END
TMOD
TOSC_OFF


FIG. 5

DR
633
BUFF
Q1
Q
S
R
632
SET1
RES1
610
+
-
610
EDGE-TRIGGERED
MONOSTABLE
ISENS
VSENS
UCR
R1
GND
621
OSC
UCR

124

FIG. 6

715
Q26
Q25
$V_{CC}$
$I_{VS}$
716
Q24
Q30
$I_V$
VBP
Q23
GND

116

FIG. 7

118
801
802
VCC
DR
MONOSTABLE
MULTIVIBRATOR
VTMAX
VTMIN
ICR
NCR
UCR
804
GND
803

FIG. 8

VTRI
OSC
VOTM
OFF_END
DR
UCR
VSENS
MOD
TIME
901
902
903a
903b
904
905
906
907
910
912
914
916
920
922
924
926
930
940
941
942
943
TOFF_OSC
TON_OSC
TMOD
TOFF_DR
TON_DR
TOSC

FIG. 9A

VTRI
OSC
VOTM
OFF_END
DR
UCR
VSENS
TIME
MOD
961
962
963a
963b
964
965
966
967
971
972
973
974
975
945
946
TOFF_EXT
TON_OSC
TOFF_OSC
TMOD
TON_DR

FIG. 9B

TON_EXT
TON_EXT
VTRI
948
949
989
990
981
988
991
OSC
TON_OSC
TOFF_OSC
982
TOSC
VOTM
983a
983b
MOD
990
TMOD
OFF_END
984
DR
TON_DR
TOFF_DR
985
UCR
VSENS
986
987
TIME

FIG. 9C

VTRI
938
939
993
931
932
933
OSC
TON_OSC
TOFF_OSC
994
TOSC
VOTM
995a
995b
MOD
TMOD
OFF_END
996
DR
TON_DR
TOFF_DR
997
UCR
VSENS
998
999
TIME

FIG. 9D

1000a
1001
START/RESET TIMER
1003
TURN SWITCH ON
1004
ISW<ITH & TIME<TON_FIX
YES
NO
1005
ISW>ITH & TIME<TON_FIX
NO
1006
ISW<ITH & TIME>TON_FIX
YES
YES
1007
TURN SWITCH OFF
1008
NO
TURN SWITCH OFF
1009
TIME>TON_FIX
NO
YES
1010
CONT

FIG. 10A

1000b
1010
CONT
1012
START/RESET TIMER
1014
TIME<TMOD(VOUT) &
TIME<TOFF_FIX(VIN)
YES
NO
1015
TIME>TMOD(VOUT) &
TIME<TOFF_FIX(VIN)
NO
1016
TIME<TMOD(VOUT) &
TIME>TOFF_FIX(VIN)
YES
NO
1019
TIME>TOFF_FIX(VIN)
NO
YES
1020
RETURN

FIG. 10B

1000c
1032
PROVIDE A SWITCH CURRENT BY TURNING ON A POWER SWITCH AT THE BEGINNING OF A VARIABLE PWM SWITCHING CYCLE
1033
PROVIDE A SWITCH CURRENT FEEDBACK SIGNAL INDICATIVE OF THE SWITCH CURRENT DURING A DRIVE ON TIME
1034
TURN OFF THE SWITCH AT THE CONCLUSION OF THE DRIVE ON TIME IN RESPONSE TO THE SWITCH CURRENT FEEDBACK SIGNAL REACHING A THRESHOLD VAULE
1035
DETERMINE THE PWM ON TIME BY COMPARING THE DRIVE ON TIME TO A FIXED ON TIME
1036
PROVIDE AN OUTPUT FEEDBACK SIGNAL INDICATIVE OF THE OUTPUT VOLTAGE
1037
DETERMINE A MODULATION WIDTH IN RELATION TO THE OUTPUT FEEDBACK SIGNAL
1038
DETERMINE THE PWM OFF TIME BY COMPARING THE MODULATION WIDTH TO A FIXED OFF TIME

FIG. 10C

Control Current vs Switching Frequency
Max frequency = 152kHz and No-Extension mode (Ton < 4.4us)
Ton =4.4us
Ton = 3.0us
Ton = 2.0us
Ton = 0.4us
Switching Frequency (MHz)
0.200
0.180
0.160
0.140
0.120
0.100
0.080
0.060
0.040
0.020
0.000
0.152 (MHz)
1105
1104
1103
1102
0
50
100
150
200
250
300
350
Control Current (uA)

FIG. 11A

Control Current vs Switching Frequency
Max Frequency = 152kHz Ton =0.4us ~ 15us
Ton = 0.4us ~ 4.4us
Ton = 6.4us
Ton = 9us
Ton = 15us (Maximum Extension On-Time)
Switching Frequency (MHz)
0.200
0.180
0.160
0.140
0.120
0.100
0.080
0.060
0.040
0.020
0.000
0.152 (MHz)
1114
1115
1113
1112
0
50
100
150
200
250
300
350
Control Current (uA)

FIG. 11B

Simulation
OFF time vs VIN with three TOFF COMP (0.0X, 1.0X, 1.25X, 1.50X)
TOFF (usec)
VIN (V)
4.50
4.00
3.50
3.00
2.50
2.00
1.50
0
100
200
300
400
1.5X: 380, 4.13
1.25X :380, 3.58
1.0X :380, 3.22
0.0X :380, 2.20
2.88
2.78
2.65
2.23
130, 2.23

FIG. 12A

Simulation
Power vs VIN with three TOFF COMP (0.0X, 1.0X, 1.25X, 1.5X)
Power (W)
VIN (V)
80.0
70.0
60.0
50.0
40.0
30.0
20.0
10.0
0.0
0
100
200
300
400
750uH 0.0X :70.6
750uH 1.0X :63.4
750uH 1.25X:59.8
750uH 1.5X :55.4
61.4
59.2
51.3
46.2
400uH 0.0X :42.4
400uH 1.0X :37.1
400uH 1.25X:34.9
400uH 1.5X :32.4
36.9
32.7

FIG. 12B

# EUROPEAN SEARCH REPORT

Application Number
EP 25 17 5222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/055433 A1 (YANG TA-YUNG [US] ET AL) 16 March 2006 (2006-03-16)<br>* abstract *<br>* paragraph [0001] - paragraph [0047]; claims 1-13; figures 1-9 * | 1-21 | INV.<br>H02M1/00<br>H02M3/335 |
| X | US 6 768 657 B1 (YANG TA-YUNG [US] ET AL) 27 July 2004 (2004-07-27)<br>* abstract *<br>* column 1 - column 7; figures 1-5 * | 1-21 | |
| X | US 6 661 679 B1 (YANG TA-YUNG [TW] ET AL) 9 December 2003 (2003-12-09)<br>* abstract *<br>* column 1 - column 6; figures 1-6 * | 1-21 | |

TECHNICAL FIELDS SEARCHED (IPC)

H02M

The present search report has been drawn up for all claims

| Place of search | Date of completion of the search | Examiner |
|---|---|---|
| The Hague | 4 October 2025 | Adami, Salah-Eddine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 17 5222

This annex lists the patent family members relating to the patent documents cited in the above-mentioned European search report. The members are as contained in the European Patent Office EDP file on
The European Patent Office is in no way liable for these particulars which are merely given for the purpose of information.

04-10-2025

| Patent document cited in search report | Publication date | Patent family member(s) | Publication date |
|---|---|---|---|
| US 2006055433 A1 | 16-03-2006 | NONE | |
| US 6768657 B1 | 27-07-2004 | NONE | |
| US 6661679 B1 | 09-12-2003 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63648398
- US 18845125
- US 9246392 B